# EUROPEAN PATENT APPLICATION

(11) **EP 4 760 903 A1**
(43) Date of publication of application: **17.06.2026**
(21) Application number: 24938637.6
(22) Date of filing: 06.12.2024
(51) Int. Cl.: H01M 50/20

(54) **BATTERY CASING, SINGLE BATTERY, AND BATTERY PACK**

(30) Priority: 13.05.2024 CN 202421037425 U; 13.05.2024 CN 202421037409 U; 14.05.2024 CN 202421049040 U; 29.09.2024 CN 202422392048 U
(71) Applicant: Eve Energy Co., Ltd., Huizhou, Guangdong 516006 (CN)
(72) Inventor: LI, Futao, Huizhou, Guangdong 516006 (CN); ZHU, Junming, Huizhou, Guangdong 516006 (CN); LI, Xixin, Huizhou, Guangdong 516006 (CN); HAN, Jiaqi, Huizhou, Guangdong 516006 (CN)
(74) Representative: Herrero & Asociados, S.L.
(86) International application number: PCT/CN2024/137528
(87) International publication number: WO 2025/236632

(57) **Abstract**

The present disclosure provides a battery housing, a battery cell, and a battery pack. The battery housing includes a top cover plate and a cell housing for assembling a positive terminal. The top cover plate is welded at a top opening provided at a top of the cell housing. The top cover plate is in a shape of a flat plate. The cell housing is outwardly expanded at the top opening along a circumferential direction of the top opening and then bent to form a first step section. The top cover plate abuts against and is welded to the first step section.

## Description

The present disclosure claims priority to Chinese Patent Application Nos. 202421037425.5 and 202421037409.6, filed with the Chinese Patent Office on May 13, 2024, priority to Chinese Patent Application No. 202421049040.0, filed with the Chinese Patent Office on May 14, 2024, and priority to Chinese Patent Application No. 202422392048.3, field with the Chinese Patent Office on September 29, 2024, the disclosures of which are incorporated herein by reference in their entireties.

### TECHNICAL FIELD

The present disclosure relates to the field of battery technologies, and in particular, to a battery housing, a battery cell, and a battery pack.

### BACKGROUND

At present, lithium-ion power batteries are widely used in the new energy vehicle industry. A manufacturing process of a battery cell is complex, involving a series of precision processes including slurry preparation, coating, cold pressing, slitting, winding, baking, electrolyte injection, formation, secondary electrolyte injection, and finally, sealing a top cover plate to a cell housing via laser welding.

### TECHNICAL PROBLEM

However, after actual welding of the cell housing and the top cover plate, it was found that the top cover plate in related technology usually needs to be perforated in itself to assemble a pole terminal. Alternatively, some bending structures need to be provided for better assembly and welding. Such an arrangement requires a complex curved surface or concave-convex shape design, and requires complex molds and processing equipment, resulting in high production costs and is not conducive to large-scale production.

### TECHNICAL SOLUTION

According to a first aspect, the present disclosure provides a battery housing, which includes a top cover plate and a cell housing for assembling a positive terminal. The top cover plate is welded at a top opening provided at a top of the cell housing. The top cover plate is in a shape of a flat plate. The cell housing is outwardly expanded at the top opening along a circumferential direction of the top opening and then bent to form a first step section. The top cover plate abuts against and is welded to the first step section.

According to a second aspect, the present disclosure provides a battery cell, which includes the cell housing provided in the present disclosure and a positive terminal. The positive terminal is provided on the cell housing, and the cell housing serves as a negative electrode.

In a third aspect, the present disclosure provides a battery pack, which includes the battery cell provided by the present disclosure.

### BENEFICIAL EFFECTS

The beneficial effects of the battery housing, the battery cell and the battery pack provided in the present disclosure are as follows: in the present disclosure, different from the assembly structure of the housing and the top cover plate in the related technologies, in the present disclosure, the positive terminal is assembled on the cell housing rather than on the top cover plate. At the same time, the top cover plate is in a shape of a flat plate, which means that the manufacturing process of the top cover plate is relatively simple and does not require complex molds and processing equipment. In the production process, the molding speed of the top cover plate is fast, the quality is easy to control, the scrap rate in the production process can be reduced, and the production cost is reduced. In addition, there is no need for a complex design of curved surface or concave-convex shape, which makes the manufacturing period of the mould short and low cost, and facilitates large-scale production.

### BRIEF DESCRIPTION OF THE DRAWINGS

FIG. 1 is a schematic structural diagram of a battery housing according to an embodiment of the present disclosure;
FIG. 2 is a cross-sectional schematic diagram of an internal structure of a battery housing according to an embodiment of the present disclosure;
FIG. 3 is a cross-sectional schematic diagram of an internal structure of a battery housing according to another embodiment of the present disclosure;
FIG. 4 is a cross-sectional schematic diagram of an internal structure of a battery housing according to still another embodiment of the present disclosure;
FIG. 5 is a cross-sectional schematic diagram of an internal structure of a battery housing according to still another embodiment of the present disclosure;
FIG. 6 is a schematic flowchart of manufacturing a metal shell cell core in related technologies;
FIG. 7 is a top view schematic diagram of a hollow housing in related technologies and a cross-sectional schematic diagram of the hollow housing taken along a line A-A;
FIG. 8 is a schematic diagram of a planar structure of a bottom plate in related technologies and an enlarged schematic diagram of a partial structure of the bottom plate at a region I;
FIG. 9 is a top view schematic diagram of a shell assembly formed by connecting the hollow housing and the bottom plate shown in FIG. 8, and a cross-sectional schematic diagram of the shell assembly taken along a line B-B;
FIG. 10 is a schematic diagram of a planar structure of a cover plate in related technologies and an enlarged schematic diagram of a partial structure of the cover plate at a region C;
FIG. 11 is a top view schematic diagram of a metal shell formed by connecting the cover plate shown in FIG. 10, a cell core and the shell assembly, and a cross-sectional schematic diagrams of the metal shell taken along a line D-D;
FIG. 12 is a schematic diagram of a three-dimensional structure of a battery housing according to an embodiment of the present disclosure;
FIG. 13 is an exploded schematic diagram of the battery housing shown in FIG. 12;
FIG. 14 is a cross-sectional schematic diagram of the battery housing shown in FIG. 12;
FIG. 15 is an enlarged schematic diagram of a partial structure at a region E in FIG. 14;
FIG. 16 is a cross-sectional schematic diagram and a partially enlarged schematic diagram of a battery housing according to another embodiment of the present disclosure;
FIG. 17 is a cross-sectional schematic diagram of a battery housing according to another embodiment of the present disclosure;
FIG. 18 is an enlarged schematic diagram of a partial structure at a region F in FIG. 17;
FIG. 19 is an exploded schematic diagram of a battery cell according to another embodiment of the present disclosure;
FIG. 20 is a schematic flowchart of manufacturing a battery cell according to an embodiment of the present disclosure;
FIG. 21 is a schematic diagram of a planar structure of a cell housing according to an embodiment of the present disclosure;
FIG. 22 is a cross-sectional schematic diagram of the cell housing shown in FIG. 21 taken along a line G-G;
FIG. 23 is a schematic diagram of a planar structure of a top cover plate according to an embodiment of the present disclosure;
FIG. 24 is a cross-sectional schematic diagram of an assembly of the cell core, the top cover plate and the cell housing;
FIG. 25 is a schematic diagram of a three-dimensional structure of a battery cell according to an embodiment of the present disclosure;
FIG. 26 is an exploded schematic diagram of the battery cell shown in FIG. 25;
FIG. 27 is an exploded schematic diagram of a battery housing according to an embodiment of the present disclosure;
FIG. 28 is a schematic diagram of a three-dimensional structure of a main housing shown in FIG. 27;
FIG. 29 is an exploded schematic diagram of the main housing shown in FIG. 28;
FIG. 30 is a cross-sectional schematic diagram of the battery cell shown in FIG. 25;
FIG. 31 is an enlarged schematic diagram of a structure at a region B in FIG. 30;
FIG. 32 is a schematic diagram of a three-dimensional structure of a battery cell according to another embodiment of the present disclosure;
FIG. 33 is an exploded schematic diagram of the battery cell shown in FIG. 32;
FIG. 34 is an exploded schematic diagram of a battery housing according to another embodiment of the present disclosure;
FIG. 35 is a schematic diagram of a three-dimensional structure of a main housing shown in FIG. 34;
FIG. 36 is a schematic diagram of a three-dimensional structure of a cover shown in FIG. 34 and an enlarged schematic diagram of a partial structure of the cover at a region A;
FIG. 37 is a cross-sectional schematic diagram of the battery cell shown in FIG. 32;
FIG. 38 is an enlarged schematic diagram of a partial structure at a region B in FIG. 36;
FIG. 39 is an enlarged schematic diagram of a partial structure at a region C in FIG. 35;
FIG. 40 is an enlarged schematic diagram of a partial structure at a region D in FIG. 35.

Reference numerals: 1, top cover plate; 11, top cover welding section; 2, cell housing; 21, first step section; 22, outer expansion section; 23, second step section; 3, positive terminal; 4, square cell; 5, accommodation cavity; 6, bottom cover plate; 10, hollow housing; 20, bottom plate; 30, cover plate; 100, cell core; 200, battery housing; 121, opening; 125, main bottom wall; 124, main sidewall; 123, terminal hole; 16, injection port; 211, cover top wall; 221, cover sidewall; 22a, first cover sidewall; 22b, second cover sidewall; 231, clearance space; 24, extension section; 300, pole; 00, battery cell; 12, main body portion; 14, connection portion; 142, through hole; 16, bending portion; 122, protrusion; 122a, first protrusion; 122b, second protrusion.

### DETAILED DESCRIPTION

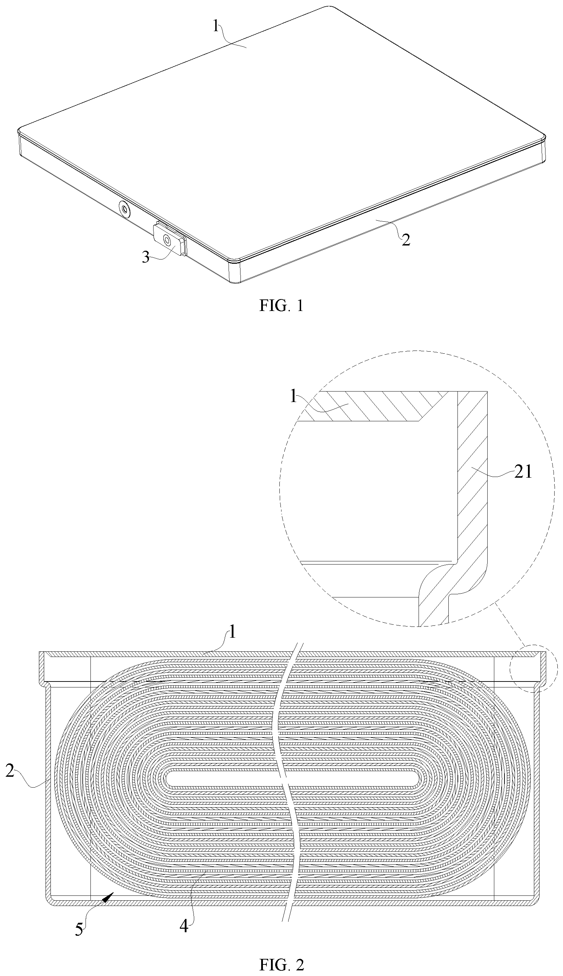

Please refer to FIG. 1 to FIG. 5 together, the present disclosure provides a battery housing and a battery pack including the battery housing.

As shown in FIG. 2, in an embodiment of the present disclosure, the battery housing includes a top cover plate 1 and a cell housing 2 provided with a positive terminal 3. The top cover plate 1 is welded at a top opening provided at a top of the cell housing 2. The top cover plate 1 is in a shape of a flat plate. The cell housing 2 is outwardly expanded at the top opening along a circumferential direction of the top opening and then bent to form a first step section 21. The top cover plate 1 abuts against and is welded to the first step section 21.

In the present disclosure, different from an assembly structure of a housing and a top cover plate in related technologies, in the present disclosure, the positive terminal 3 is assembled on the cell housing 2 rather than on the top cover plate 1. At the same time, the top cover plate 1 is in a shape of a flat plate, which means that a manufacturing process of the top cover plate 1 is relatively simple and does not require complex molds and processing equipment. In the production process, the molding speed of the top cover plate 1 is fast, the quality is easy to control, the scrap rate in the production process can be reduced, and the production cost is reduced. In addition, there is no need for a complex design of curved surface or concave-convex shape, which makes the manufacturing period of the mould short and low cost, and facilitates large-scale production.

Furthermore, the flat-plate-shaped top cover plate 1 has a smooth surface, making it easy to achieve uniform sealing pressure when sealing with the cell housing 2, thereby ensuring a sealing effect of sealing glue or a sealing ring, and reducing an occurrence rate of phenomena such as electric leakage, short circuit, or electrolyte leakage caused by poor sealing of the battery. At the same time, the flat-plate-shaped top cover plate 1 has a simple structure without complex concave-convex shapes, which can better bear an upper pressure. It cooperates with the cell housing 2 to make an overall structure of the battery stable and less prone to distortion or deformation.

In a specific embodiment, the first step section 21 is vertically arranged. The first step section 21 vertically arranged is relatively easy to be processed and shaped during the manufacturing process. For example, the first step section 21 may be quickly formed at the top opening of the cell housing 2 through processes such as stamping and bending, thereby improving production efficiency. At the same time, during an assembly process, a definite position and shape of the first step section 21 make an installation of the top cover plate 1 simple and fast, reducing the difficulty and error rate of assembly.

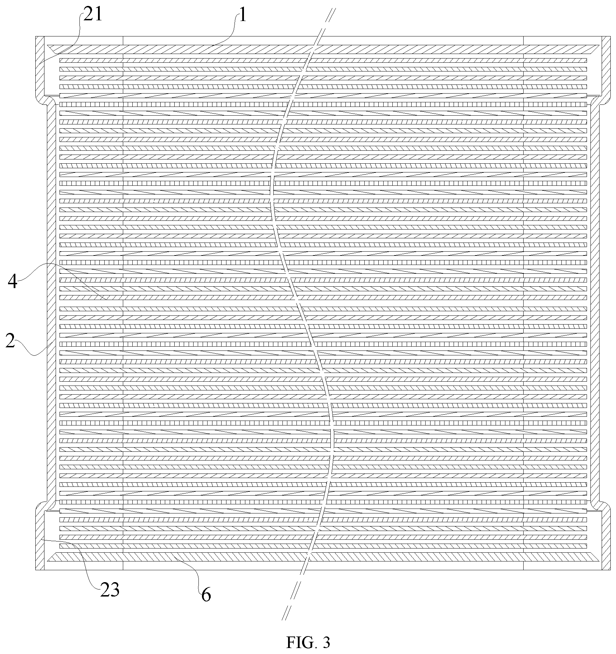

As shown in FIG. 3, in another embodiment, the battery housing further includes a bottom cover plate 6. The bottom cover plate 6 is welded at a bottom opening provided at a bottom of the cell housing 2. The bottom cover plate 6 is in a shape of a flat plate. The cell housing 2 is outwardly expanded at the bottom opening along a circumferential direction of the bottom opening and then bent to form a second step section 23. The bottom cover plate 6 abuts against and is welded to the second step section 23 of the cell housing 2. In this way, the flat-plate-shaped bottom cover plate 6 has good rigidity and can evenly distribute pressure from various directions, so as to protect internal cells and other components. Furthermore, the welding between the flat-plate-shaped bottom cover plate 6 and the second step section 23 can form a relatively flat sealing surface. During a welding process, due to a flat surface, it is easier to achieve uniform welding strength and improve sealing performance. Such a sealing structure can effectively prevent electrolyte leakage and external impurities from entering the interior of the battery, thereby ensuring safe operation of the battery. At the same time, the flat plate design has a simple structure and a relatively easy manufacturing process. It can be quickly produced through conventional processing methods such as stamping and cutting, thereby reducing production costs. The simple structure also makes quality control easier and reduces a defect rate in the production process.

In the embodiment of the present disclosure, the battery housing has the top opening and the bottom opening which are distributed vertically, as well as the flat-plate-shaped top cover plate 1 and the flat-plate-shaped bottom cover plate 6. This structure enables rapid production and reduces production costs.

As shown in FIG. 3, the second step section 23 extends vertically. With this arrangement, the vertically extending second step section 23 may be realized through simple processes such as stamping and bending during the manufacturing process, thereby improving production efficiency. At the same time,a definite shape and size make an assembly of the bottom cover plate 6 easier, reducing assembly difficulty and error rate. Such a design facilitates the implementation of automated production and increases production scale and quality stability.

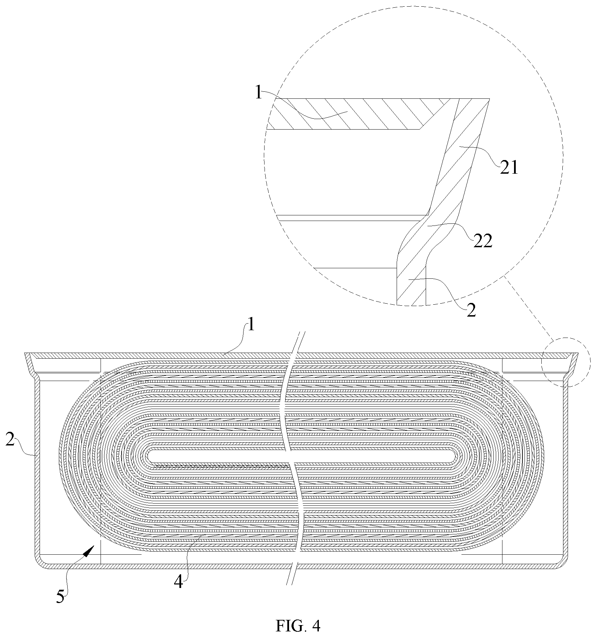

As shown in FIG. 4, in another embodiment of the present disclosure, the first step section 21 is provided to be inclined outwards. In this specific implementation, the first step section 21 inclined outwards is combined with the flat-plate-shaped top cover plate 1, in which the first step section 21 inclined outwards provides an inclined support surface for the top cover plate 1. During installation, the top cover plate 1 may gradually slide along the inclined support surface into a correct position, achieving fast and accurate positioning. Therefore, this design enables the top cover plate 1 to automatically align with the top opening of the cell housing 2 during installation, reducing adjustment and calibration effort during installation. Furthermore, a wedge-shaped structure is formed between the inclined first step section 21 and the flat-plate-shaped top cover plate 1. When the two are connected by welding, the wedge-shaped structure can increase a contact area of a welding surface, improving the strength and stability of the welding. At the same time, the first step section 21 inclined outwards can be realized by simple processes such as punching and bending in the manufacturing process. The flat-plate-shaped top cover plate 1 is also easy to process and manufacture, reducing production costs. In an assembly process, such a design makes the installation of the top cover plate 1 more convenient and efficient, improving production efficiency. For example, an automatic assembly device can be used for installation, reducing manual operation errors and labor intensity.

In a specific implementation, a bending angle of the first step section 21 is set to α, and the bending angle α is an angle between an inclined extension direction of the first step section 21 and a vertical direction, and 0<α<90°. For example, the bending angle α can be specifically 30°, 45°, 60°, etc. Alternatively, for example, the bending angle α can be specifically other values within the range of 0<α<90°. By reasonably setting the bending angle α, the combination of the first step section 21 and the top cover plate 1 is more compact, enhancing the structural stability of the top of the battery. This structure can effectively resist external impacts, vibrations and pressures, and reduce the risk of deformation, damage or leakage of the battery during use. Furthermore, within the range of 0<α<90°, an appropriate angle can be selected according to actual needs to achieve the best sealing performance. Good sealing performance can ensure the stability of an internal chemical environment of the battery, improve the safety and reliability of the battery, and reduce the possibility of degradation and failure of the battery due to poor sealing.

In practical applications, design requirements and application scenarios of different types of batteries may be met by adjusting the bending angle α. For example, for miniaturized and portable batteries, a smaller angle α may be selected to save space; and for large-sized and high-power batteries, a larger angle α may be selected to improve structural strength and sealing performance.

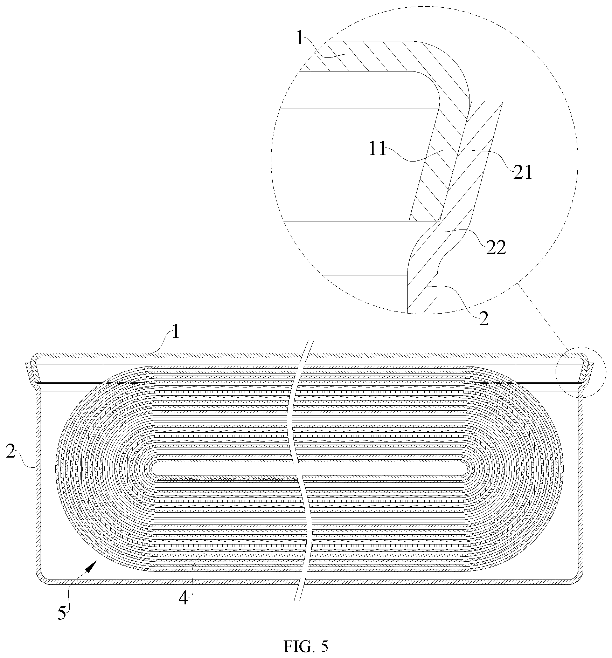

As shown in FIG. 5, in still another embodiment of the present disclosure, a circumferential side edge of the top cover plate 1 is bent inward to form a top cover welding section 11 arranged obliquely, the first step section 21 is provided to be inclined outwards, and an outer side surface of the top cover welding section 11 abuts against and welded to an inner side surface of the first step section 21.

In a specific application, the top cover plate 1 is formed with the top cover welding section 11 bent inward, and the cell housing 2 is formed with the first step section 21 bent outward at the opening, and positioning assembly is realized by using the top cover welding section 11 and the first step section 21. Specifically, positioning assembly is realized by using the outer side surface of the top cover welding section 11 and the inner side surface of the first step section 21. Due to the fact that the top cover welding section 11 and the first step section 21 are specifically arranged in a bending manner, and areas of opposite surfaces of the top cover welding section 11 and the first step section 21 are large, therefore, the area used for positioning assembly is correspondingly enlarged, so that it is easier to position and assemble the cell housing 2 and the top cover plate 1, in order to prevent tilting or rocking between the cell housing 2 and the top cover plate 1 during welding, thereby preventing poor welding.

Furthermore, the connection strength can be enhanced, so that the top cover welding section 11 and the first step section 21 tightly fit together, increasing the welding area, thereby improving the strength of the connection. When being subjected to an external force or an internal pressure, the structural integrity can be better maintained, and the risk of deformation or damage caused by weak connections is reduced. Furthermore, when the top cover welding section 11 tightly abuts against the first step section 21, a sealed welding joint can be formed. This sealing performance is very critical for some applications that require prevention of leakage of gas, liquid or dust, and can improve the overall sealing performance.

In a specific implementation, the top cover plate 1 and the cell housing 2 may be specifically made of metal materials.

In a specific implementation, a bending angle of the first step section 21 is set to α, and the bending angle α is an angle between an extension direction of the first step section 21 and a vertical direction, and 0<α<90°. A bending angle of the top cover welding section 11 is set to β, and the bending angle β is an angle between an extension direction of the top cover welding section 11 and the vertical direction, and β=α.

Due to the same bending angle between the first step section 21 and the top cover welding section 11, the structure experiences more uniform stress in all directions after welding. When an external load is applied, the force can be evenly distributed along the welding position, reducing local stress concentration, thereby reducing the risk of deformation or damage to the structure. Furthermore, this uniform force bearing characteristic is particularly important for structures that can withstand dynamic loads or vibrations, which can improve the fatigue life and reliability of the structure. At the same time, the same bending angle enables the top cover and the housing to better fit together at the welding position, increasing the effective welding area. This helps to improve the welding strength, making the connection more secure and reliable. Moreover, the improvement of the welding strength can ensure that the top cover plate 1 and the cell housing 2 will not be easily separated during long-term use, and ensure the structural integrity.

In a specific implementation, an outer expansion section 22 is provided between the first step section 21 and the cell housing 2, which is provided to be inclined outward. The presence of the outer expansion section 22 can provide better operational space for welding. When welding the first step section 21 and the top cover welding section 11, workers can more easily approach a welding position, thereby improving the quality and efficiency of welding. Furthermore, the outer expansion section 22 can also serve a function of positioning and supporting, making the welding process more stable and reducing welding defects.

In a specific embodiment, the top cover welding section 11 and the first step section 21 are both straight segment structures, and the straight segment structure enable stress to be uniformly distributed at the welding position after welding. Compared with curved or complex-shaped welding sections, straight sections are easier to achieve a uniform stress state, thereby reducing the risk of local stress concentration. Furthermore, the welding area of the straight segment is relatively large and regular, which facilitates a more secure welding connection. Furthermore, during the welding process, the solder can better fill the welding area, thereby ensuring welding quality.

In a specific implementation, the battery housing is a square housing that can be arranged more tightly during storage and installation, especially in limited spaces. Compared with cylindrical batteries, square batteries can better adapt to various shapes of device internal space, thereby reducing space waste. Furthermore, the shape of square batteries is regular and facilitates modular design. A plurality of square batteries can be combined into different battery packs, so as to satisfy power and energy requirements of different devices.

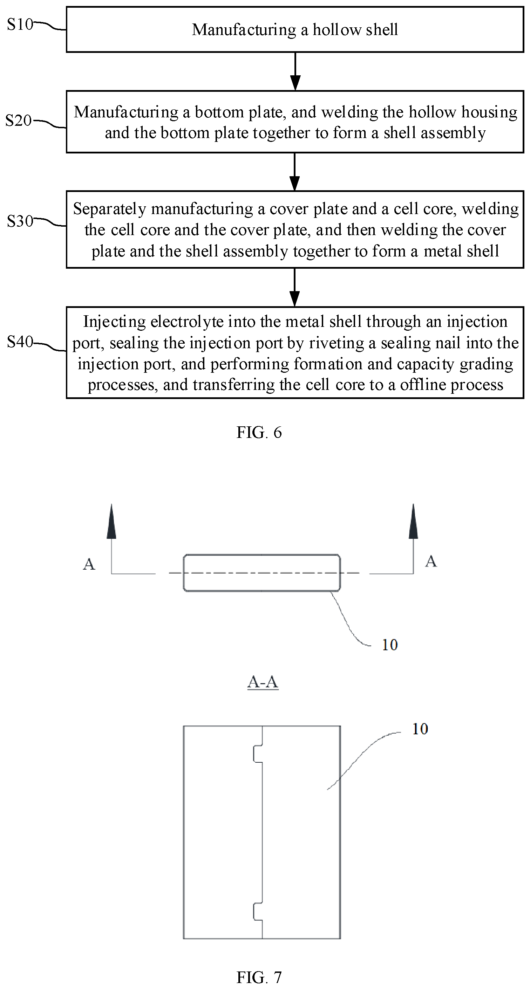

Please refer to FIG. 6, FIG. 6 is a schematic flowchart of manufacturing a metal shell cell in related technologies. In the related technologies, the production of the metal shell cell specifically includes the following steps:
Step S10, manufacturing a hollow shell 10.

Specifically, as shown in FIG. 7, FIG. 7 is a top view schematic diagram of the hollow housing 10 in related technologies and a cross-sectional schematic diagram of the hollow housing 10 taken along a line A-A. The hollow shell 10 is made of a sheet-shaped metal material. The sheet-shaped metal material has two opposite side edges. Positioning notches are formed on the two opposite side edges and match with each other. The sheet-shaped metal material is wound such that the two opposite side edges are connected to each other. In this case, the positioning notches are matched with each other. Then, the two side edges are welded together by welding, thereby forming a cylindrical hollow shell 10.

Step S20, manufacturing a bottom plate, and welding the hollow housing 10 and the bottom plate together to form a shell assembly.

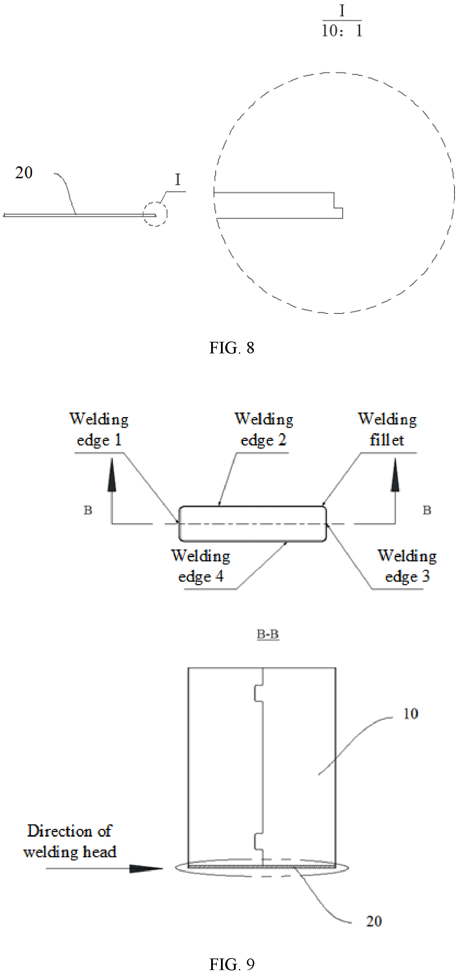

Specifically, as shown in FIG. 8 and FIG. 9, FIG. 8 is a schematic diagram of a planar structure of a bottom plate 20 in related technologies and an enlarged schematic diagram of a partial structure of the bottom plate at a region I. FIG. 9 is a top view schematic diagram of a shell assembly formed by connecting the hollow housing 10 and the bottom plate 20 shown in FIG. 8, and a cross-sectional schematic diagram of the shell assembly taken along a line B-B. The bottom plate 20 is in a thin plate shape, with a stepped positioning notch formed on its circumference. When the bottom plate 20 is welded to the hollow shell 10, the positioning notch of the bottom plate 20 is first pressed into the hollow shell 10, and then welding is successively performed by using a welding head along a welding edge 1 - a welding fillet - a welding edge 2 - a welding fillet - a welding edge 3 - a welding fillet - a welding edge 4 - a welding fillet shown in FIG. 9. Due to the fact that the welding positions of the welding head are not located in the same plane during the welding process, the hollow housing 10 needs to be flipped constantly with a welding fixture, which is very troublesome to production, the production efficiency is very low, and the defect rate is very high.

Step S30, separately manufacturing a cover plate and a cell core, welding the cell core and the cover plate, and then welding the cover plate and the shell assembly together to form a metal shell.

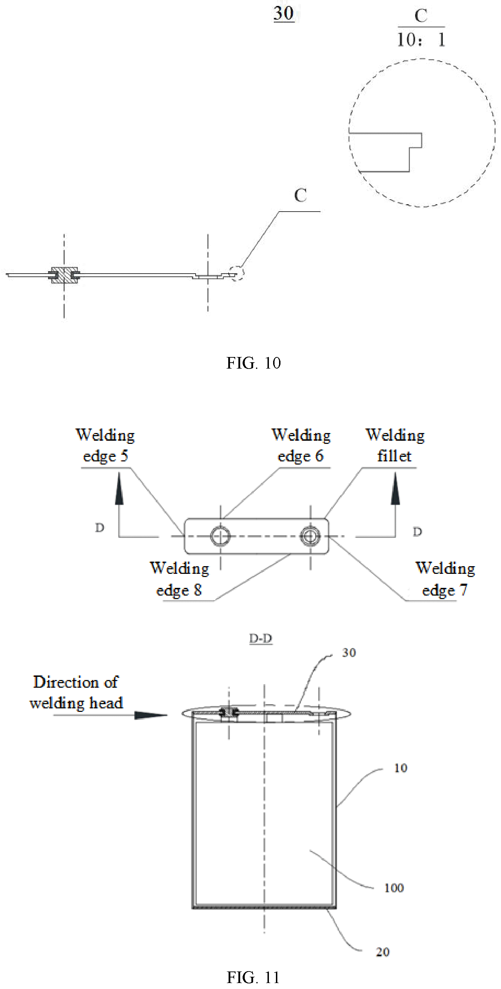

Specifically, as shown in FIG. 10 and FIG. 11, FIG. 10 is a schematic diagram of a planar structure of a cover plate 30 in related technologies and an enlarged schematic diagram of a partial structure of the cover plate at a region C. FIG. 11 is a top view schematic diagram of a metal shell formed by connecting the cover plate 30 shown in FIG. 10, a cell core 100 and the shell assembly, and a cross-sectional schematic diagram of the metal shell taken along a line D-D. The cover plate 30 is in a thin plate shape, with a stepped positioning notch formed on its circumference, and a positive pole and a injection port provided on the cover plate 30. The cell core 100 is formed by winding with a fully automatic winding machine, and has a positive electrode and a negative electrode. By means of a welding head, the positive electrode of the cell core 100 and the positive pole mounted on the cover plate 30 are welded together, and the negative electrode of the cell core 100 is directly welded together with the cover plate 30. Then, the positioning notch on the cover plate 30 is pressed into the hollow shell 10, and welding is successively performed by using a welding head along a welding edge 5 - a welding fillet - a welding edge 6 - a welding fillet - a welding edge 7 - a welding fillet - a welding edge 8 - a welding fillet shown in FIG. 11. Due to the fact that the welding positions of the welding head are not located in the same plane during the welding process, the hollow housing 10 needs to be flipped constantly with a welding fixture, which is very troublesome to production, the production efficiency is very low, and the defect rate is very high.

Step S40, injecting electrolyte into the metal shell through an injection port, sealing the injection port by riveting a sealing nail into the injection port, and performing formation and capacity grading processes, and transferring the cell core to a offline process.

In conclusion, in the related technologies, due to the need for separate welding between the hollow shell 10 and the bottom plate 20, as well as between the hollow shell 10 and the cover plate 30, and the fact that the welding positions are not located in the same plane, the hollow shell 10 needs to be flipped continuously with a welding fixture during the welding process, which is very troublesome to production, the production efficiency is very low, and the defect rate is very high.

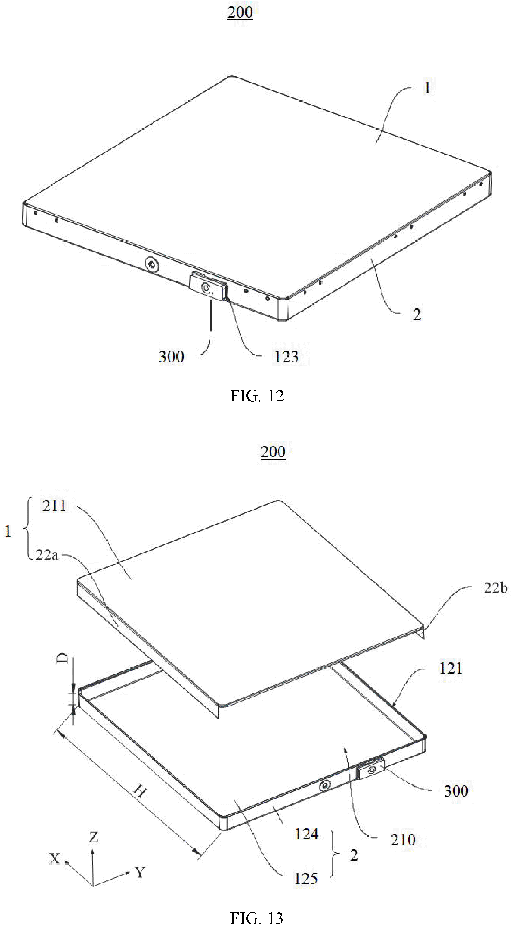

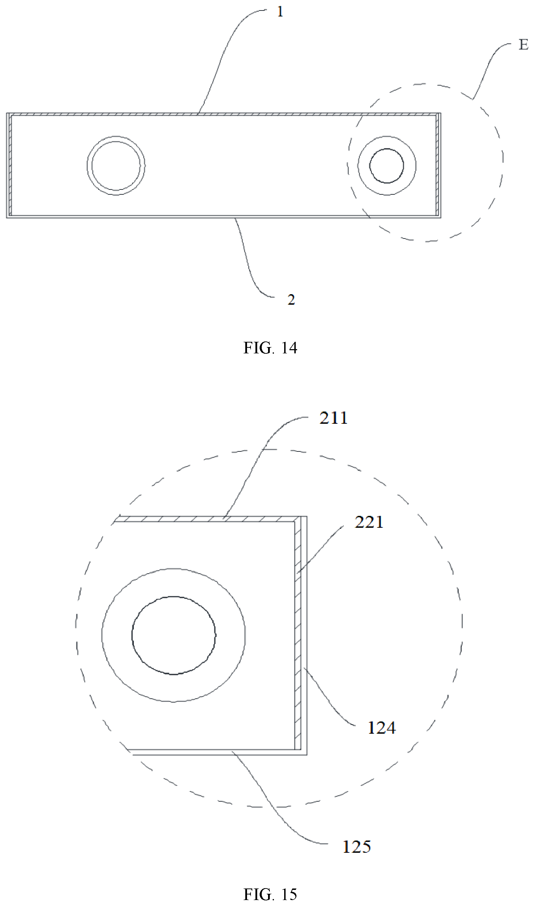

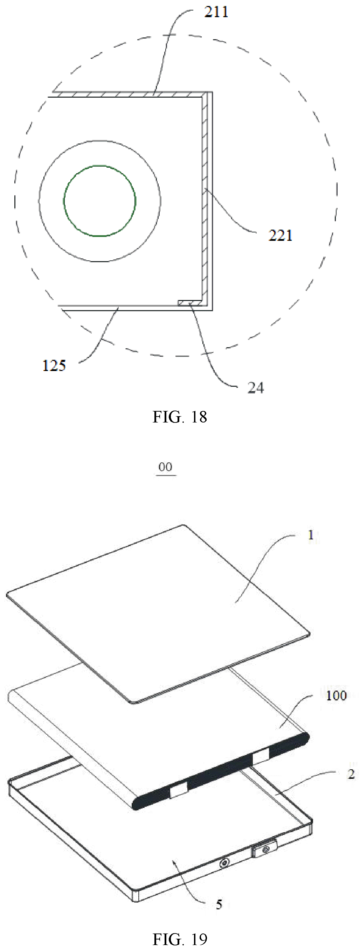

Therefore, in an embodiment of the present disclosure, a new battery housing 200 is provided. Specifically as shown in FIG. 12 to FIG. 15. FIG. 12 is a schematic diagram of a three-dimensional structure of the battery housing 200 provided by this embodiment, FIG. 13 is an exploded schematic structural diagram of the battery housing 200 shown in FIG. 12, FIG. 14 is a cross-sectional schematic diagram of the battery housing 200 shown in FIG. 12, and FIG. 15 is an enlarged schematic diagram of a partial structure at a region E in FIG. 14. The battery housing 200 includes a cell housing 2 and a top cover plate 1. The cell housing 2 is provided with an accommodation cavity 5 for accommodating a cell core 100 (as shown in FIG. 19) and an opening 121 in communication with the accommodation cavity 5. The top cover plate 1 is inserted into the accommodation cavity 5 through the opening 121 and abuts against a bottom of the accommodation cavity 5 so as to close the opening 121. The cell housing 2 and the top cover plate 1 are welded together at the opening 121.

Specifically, the accommodation cavity 5 provided on the cell housing 2 is configured to accommodate and protect the cell core 100. The cell core 100 is placed inside the accommodation cavity 5 through the opening 121 provided on the cell housing 2. The top cover plate 1 is connected to the cell housing 2 and covers the accommodation cavity 5. The top cover plate 1 can be positioned by arranging the top cover plate 1 to abut against the bottom of the accommodation cavity 5. In the present embodiment, the battery housing 200 is arranged as the cell housing 2 and the top cover plate 1 separated from each other, and when connecting the cell housing 2 and the top cover plate 1, a portion of the top cover plate 1 is first inserted into the accommodation cavity 5, so that the portion of the top cover plate 1 abuts against the bottom of the accommodation cavity 5 for positioning, and then the top cover plate 1 and the cell housing 2 are welded through a welding head. Due to the welding positions of the top cover plate 1 and the cell housing 2 being located in the same plane, there is no need to flip the cell housing 2 with a welding fixture during the welding process of the welding head, thereby reducing the process complexity of the battery housing 200, and accordingly reducing the defect rate of the battery cell.

As shown in FIG. 13 and FIG. 15, in this embodiment, the cell housing 2 includes a main bottom wall 125 and multiple main sidewalls 124. The multiple main sidewalls 124 and the main bottom wall 125 are connected together to form the accommodation cavity 5. The multiple main sidewalls 124 enclose to form the opening 121. The top cover plate 1 includes a cover top wall 211 and multiple cover sidewalls 221. The multiple cover sidewalls 221 are connected to edges of the cover top wall 211. The cover top wall 211 covers the opening 121. A side surface of the cover sidewall 221 is attached to the main sidewall 124. A bottom of at least one of the multiple cover sidewalls 221 abuts against the main bottom wall 125.

In this embodiment, the main bottom wall 125 is in a rectangular shape, and the number of the main sidewalls 124 is four. The four main sidewalls 124 are respectively arranged on four sides of the main bottom wall 125 and extend towards the same side of the main bottom wall 125, so as to form the accommodation cavity 5 together. The cover top wall 211 is in a rectangular shape, and the number of the cover sidewalls 221 is two. The two cover sidewalls 221 are respectively arranged on two opposite edges of the cover top wall 211 and are connected to the cover top wall 211, and extend towards the same side of the cover top wall 211. When the top cover plate 1 covers the cell housing 2, the cover sidewalls 221 are located inside the accommodation cavity 5, and an outer side surface of the cover sidewall 221 abuts against the main sidewall 124 so as to seal the accommodation cavity 5; the bottom of the cover sidewall 221 facing away from the cover top wall 211 abuts against the main bottom wall 125. By arranging the two cover sidewalls 221 at two opposite sides of the cover top wall 211 respectively, the two opposite sides of the top cover plate 1 can be supported on the main bottom wall 125, thereby making the top cover plate 1 more evenly stressed.

In this embodiment, as shown in FIG. 13, each section of the cover sidewall 221 arranged on the cover top wall 211 is configured with equal height dimensions, thereby enhancing the supporting force exerted by the main bottom wall 125 on the cover sidewall 221. Alternatively, the cover sidewall 221 may include sections with varying heights, where height-uniform sections are spaced apart to form multiple spaced support points. By configuring a portion of the bottom of the cover sidewall 221 away from the cover top wall 211 to abut the main bottom wall 125, while configuring the other portion of the bottom to maintain clearance from the main bottom wall 125, it is possible to avoid interference between the top cover plate 1 and the cell housing 2 caused by excessive contact, thereby reducing machining accuracy of the top cover plate 1 and the cell housing 2.

Currently, in an assembly process of a battery cell, a pole is first assembled on a top cover plate, then a cell core is welded with the pole, and finally the top cover plate assembled with the pole and the cell core is covered on an opening of a cell housing and is welded to the cell housing. In this case, the cell core is accommodated in an accommodation cavity. Due to the small thickness of the top cover plate and the heavy weight of the assembled cell core, the top cover plate is easy to deform after assembling the cell core, which is not only unfavorable for welding of the top cover plate and the cell housing, but also inconvenient for storage of the top cover plate assembled with the pole and the cell core.

Please refer to FIG. 12 and FIG. 13, the cell housing 2 is provided with a terminal hole 123, which is configured to be assembled with a pole 300. The opening 121 and the terminal hole 123 are separately provided at two adjacent sides of the cell housing 2. The pole 300 is inserted into the terminal hole 123, a portion of the pole 300 located inside the accommodation cavity 5 is connected to the cell core 100, and a portion of the pole 300 located outside the accommodation cavity 5 is configured to be connected to electrical components of an electronic device, that is, the pole 300 is configured to electrically connect the cell core 100 to the electrical components.

In this embodiment, the openings 121 and the terminal holes 123 are respectively provided at two adjacent sides of the cell housing 2, so that the pole 300 and the top cover plate 1 are respectively installed at two adjacent sides of the cell housing 2. When assembling the battery cell 00, the pole 300 is first assembled to the terminal hole 123 of the cell housing 2, then the cell core 100 is placed into the accommodation cavity 5, and the cell core 100 is welded to the pole 300, and finally the top cover plate 1 is placed on the opening 121 of the cell housing 2 and welded to the cell housing 2. In this way, assembly difficulty of the battery cell 00 can be simplified. Furthermore, since there are no heavy objects attached to the top cover plate 1, it can make storage and transportation of the top cover plate 1 more convenient, and can avoid affecting the welding connection between the top side cover plate 1 and the cell housing 2 due to deformation of the top cover plate 1.

In this embodiment, the cell housing 2 is provided with the main bottom wall 13 arranged in a horizontal direction and the main sidewall 14 arranged in a height direction. The cell housing 2 is provided with the opening 121 in the height direction, and the cell housing 2 is provided with the terminal hole 123 in the horizontal direction.

As shown in FIG. 13, the horizontal direction of the cell housing 2 is a horizontal plane direction formed by an X-axis and a Y-axis, while the height direction of the cell housing 2 is a Z-axis direction perpendicular to the horizontal plane direction formed by the X-axis and the Y-axis. The opening 121 of the cell housing 2 extends along the Z-axis direction and communicates with the accommodation cavity 5, so that the cell core 100 can be placed into the accommodation cavity 5 through the opening 121. In this embodiment, by arranging the opening 121 of the cell housing 2 in the height direction of the cell housing 2, the molding of the cell housing 2 can be facilitated.

As shown in FIG. 13 to FIG. 15, in the present embodiment, the multiple cover sidewalls 221 include a first cover sidewall 22a and a second cover sidewall 22b. The first cover sidewall 22a and the second cover sidewall 22b are arranged on two opposite sides of the cover top wall 211. When the top cover plate 1 is connected to the cell housing 2, side surfaces of the first cover sidewall 22a and the second cover sidewall 22b which are away from each other are respectively attached to the corresponding main sidewalls 124. The bottom of the first cover sidewall 22a and the bottom of the second cover sidewall 22b abut against the main bottom wall 125. The terminal hole 123 is provided on the main sidewall 124 at a position where the main sidewall 124 is not attached to the first cover sidewall 22a and the second cover sidewall 22b.

The cover top wall 211 is in a rectangular shape, and the first cover sidewall 22a and the second cover sidewall 22b are respectively connected to two opposite side edges of the cover top wall 211. The sides surfaces of the first cover sidewall 22a and the second cover sidewall 22b which are away from each other refer to outer side surfaces of the first cover sidewall 22a and the second cover sidewall 22b. The outer surface of the first cover sidewall 22a is attached to an inner surface of the main sidewall 124 opposed to the first cover sidewall 22a, and the outer surface of the second cover sidewall 22b is attached to an inner surface of the main sidewall 124 opposed to the second cover sidewall 22b. By arranging the bottom of the first cover sidewall 22a and the bottom of the second cover sidewall 22b to abut against the main bottom wall 125 respectively, the two opposite sides of the cover top wall 211 can be uniformly stressed. By arranging the terminal hole 123 in the main sidewall 124 at a position where the main sidewall 124 is not attached to the first cover sidewall 22a and the second cover sidewall 22b, it can avoid interference between the first cover sidewall 22a and the pole 300, as well as between and the second cover sidewall 22b and the pole 300.

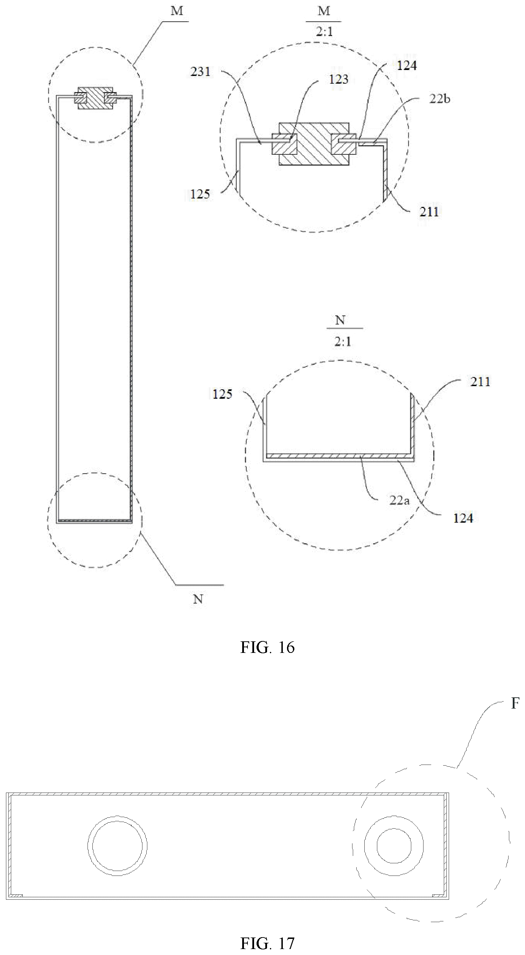

In other embodiments, as shown in FIG. 16, FIG. 16 is a cross-sectional schematic diagram and a partially enlarged schematic diagram of a battery housing 200 according to another embodiment of the present disclosure. The side surface of the first cover sidewall 22a can be attached to the main sidewall 124, the bottom of the first cover sidewall 22a abuts against the main bottom wall 125. The side surface of the second cover sidewall 22b is attached to the main sidewall 124, the bottom of the second cover sidewall 22b is spaced apart from the main bottom wall 125 to form a clearance space 231 between them, and the terminal hole 123 is arranged in the clearance space 231. In the present embodiment, the second cover sidewall 22b is attached to the main sidewall 124 of the cell housing 2 where the terminal hole 123 is provided. By forming the clearance space 231 between the second cover sidewall 22b and the main bottom wall 125, interference between the second cover sidewall 22b and the pole 300 can be avoided.

In other embodiments, the number of the cover sidewalls 221 may be three, and the three cover sidewalls 221 are arranged on adjacent edges of the cover top wall 211. Alternatively, the number of the cover sidewalls 221 may be four, and the four cover sidewalls 221 are arranged on adjacent edges of the cover top wall 211.

As shown in FIG. 17 and FIG. 18, FIG. 17 is a cross-sectional schematic diagram of a battery housing 200 according to another embodiment of the present disclosure, and FIG. 18 is an enlarged schematic diagram of a partial structure at a region F in FIG. 17. The structure of the top cover plate 1 in the present embodiment is substantially the same as that of the top cover plate 1 in other embodiments of the present embodiment. The top cover plate 1 in the present embodiment further includes an extension section 24. The extension section 24 is connected to an edge of the cover sidewall 221 away from the cover top wall 211. The extension section 24 and the cover top wall 211 extend at the same side of the cover sidewall 221. The cover sidewall 221 abuts against the main bottom wall 125 through the extension section 24. In the present embodiment, by arranging the extension section 24 on the top cover plate 1, a contact area between the cover sidewall 221 and the main bottom wall 125 can be increased, and supporting force of the cover sidewall 221 on the top cover plate 1 is improved, so that the top cover plate 1 is more stably held on the cell housing 2 for welding.

In the present embodiment, the cell housing 2 can be designed as an integrally stamped structure, and the top cover plate 1 can be designed as an integrally stamped structure. By forming the cell housing 2 and the top cover plate 1 in a stamping manner, the processing technology of the battery housing 200 can be simplified, and the processing efficiency of the battery housing 200 can be improved, thereby saving production time and reducing processing costs.

In some embodiments, the cell housing 2 and the top cover plate 1 may also be formed by injection molding or sheet metal bending.

In order to facilitate the stamping of the cell housing 2 and the top cover plate 1, the height of the cell housing 2 along the height direction may be set to be smaller than the size of the cell housing 2 along the horizontal direction, so as to shorten the depth of the accommodation cavity 5, and facilitate the stamping processing and forming of the cell housing 2 and the assembly of the cell core 100.

As shown in FIG. 13, the height of the cell housing 2 in the height direction is D, the length of the cell housing 2 in the horizontal direction is H, and D<H can be set. The height of the cell housing 2 along the Z-axis direction is D, and the horizontal length H of the cell housing 2 refers to the smaller one of the length of the cell housing 2 along the X-axis direction and the length of the cell housing 2 along the Y-axis direction.

Another embodiment of the present disclosure further provides a battery cell 00. As shown in FIG. 19, FIG. 19 is an exploded schematic diagram of a battery cell 00 according to another embodiment of the present disclosure. The battery cell 00 includes a cell core 100 and a battery housing 200 provided in the embodiments of the present disclosure. The cell core 100 is assembled in the accommodation cavity 5 of the battery housing 200.

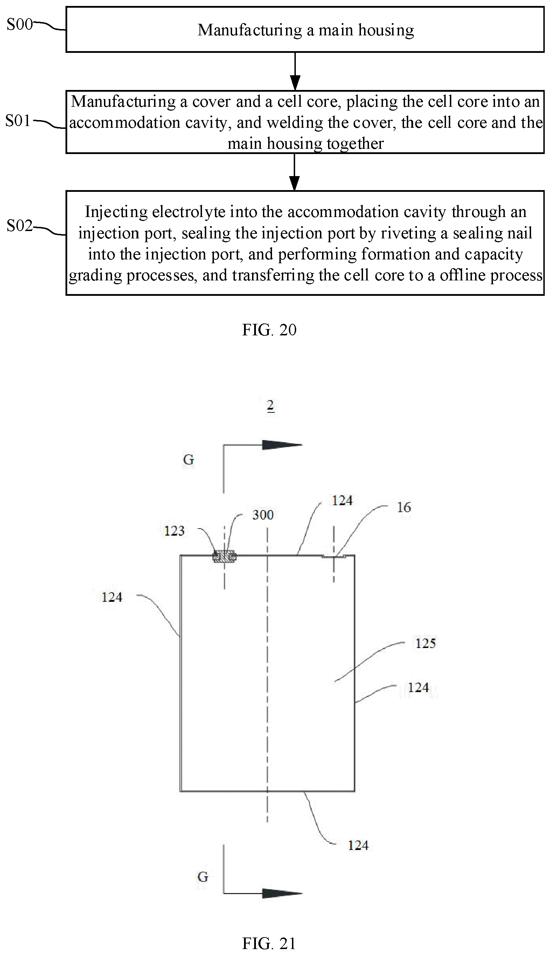

The assembly process of the battery cell 00 in this embodiment is described in detail below. Referring to FIG. 20, FIG. 20 is a schematic flowchart of manufacturing the battery cell 00 in this embodiment of the present disclosure. The production of the battery cell 00 specifically includes the following steps:
Step S00, manufacturing a cell housing 2.

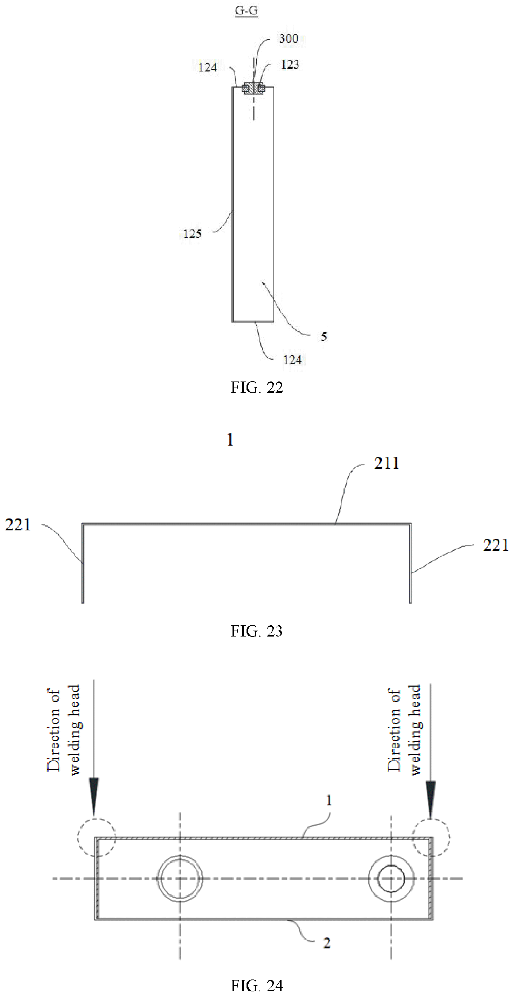

Specifically, as shown in FIG. 21 and FIG. 22, FIG. 21 is a schematic diagram of a planar structure of the cell housing 2 according to an embodiment of the present disclosure, and FIG. 22 is a cross-sectional schematic diagram of the cell housing 2 shown in FIG. 21 taken along a line G-G. The cell housing 2 is formed by integral stamping, and has a main bottom wall 125 and four main sidewalls 124. The four main sidewalls 124 are connected to the periphery of the main bottom wall 125 to form an accommodation cavity 5 and an opening 121 in communication with the accommodation cavity 1210. The terminal hole 123 and the injection port 16 are provided on a main sidewall 124 at the top, and the pole 300 is assembled in the terminal hole 123.

Step S01, manufacturing the top cover plate 1 and the cell core 100, placing the cell core 100 into the accommodation cavity 5, and welding the top cover plate 1, the cell core 100 and the cell housing 2 together.

Specifically, as shown in FIG. 23 and FIG. 24, FIG. 23 is a schematic diagram of a planar structure of the top cover plate 1 according to an embodiment of the present disclosure, and FIG. 24 is a cross-sectional schematic diagram of an assembly of the cell core 100, the top cover plate 1 and the cell housing 2. The top cover plate 1 is formed by integral stamping, and has a cover top wall 211 and two cover sidewalls 221. The two cover sidewalls 221 are connected to two opposite edges of the cover top wall 211. The cell core 100 is formed by winding with a full automatic winding machine, and has a positive electrode and a negative electrode.

During assembly, the cell core 100 is first placed in the accommodation cavity 5, one of the positive pole and the negative pole of the cell core 100 is welded to the pole 300 through a welding head, and then the other of the positive pole and the negative pole of the cell core 100 is welded to the cell housing 2. Then the top cover plate 1 is pressed into the cell housing 2 until the two cover sidewalls 221 of the top cover plate 1 contact the main bottom wall 125 to position the cover sidewalls 221, and the top cover plate 1 is welded to the cell housing 2 through the welding head. Due to the welding positions being located in the same plane, there is no need to flip the cell housing 2 with a welding fixture, the production is very simple, the production efficiency is very high, and the defect rate is very low.

Step S02, injecting electrolyte into the accommodation cavity 5 through the injection port 16, sealing the injection port 16 by riveting a sealing nail into the injection port 16, and performing formation and capacity grading processes, and transferring the cell core to a offline process.

In the embodiments of the present disclosure, the battery housing 200 is arranged as the cell housing 2 and the top cover plate 1 separated from each other, and when connecting the cell housing 2 to the top cover plate 1, a portion of the top cover plate 1 is first inserted into the accommodation cavity 5, so that the portion of the top cover plate 1 abuts against the bottom of the accommodation cavity 5 for positioning, and then the top cover plate 1 and the cell housing 2 are welded through a welding head. Due to the welding positions of the top cover plate 1 and the cell housing 2 being located in a plane, there is no need to flip the cell housing 2 with a welding fixture during the welding process, thereby reducing the process complexity of the battery housing 200, and accordingly reducing the defect rate of the battery cell 00.

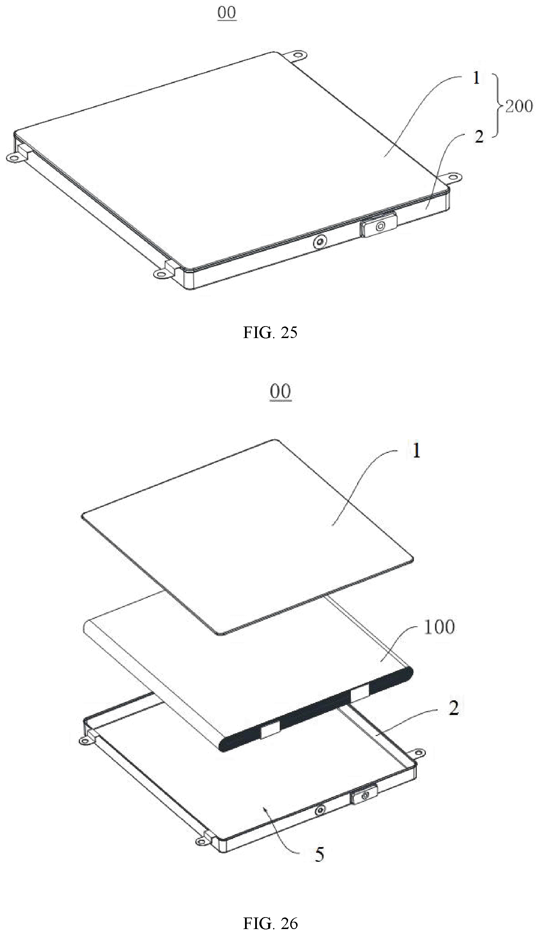

Please refer to FIG. 25 and FIG. 26, FIG. 25 is a schematic diagram of a three-dimensional structure of a battery cell 00 according to an embodiment of the present disclosure, and FIG. 26 is an exploded schematic diagram the battery cell 00 shown in FIG. 25. The present embodiment provides the battery cell 00, which includes a cell core 100 and a battery housing 200. The cell core 100 is assembled in an accommodation cavity 5 of the battery housing 200.

The cell core 100 can be a lithium battery, a sodium battery, a lead-acid storage battery, etc. The cell core 100 is configured to store and release electrical energy. The number of the cell cores 100 can be multiple, and multiple cell cores 100 may be electrically connected together in series, parallel, or both. The cell core 100 is provided inside the battery housing 200, and the battery housing 200 provides protection for the cell core 100, thereby preventing the cell core 100 from being damaged due to unstable external forces.

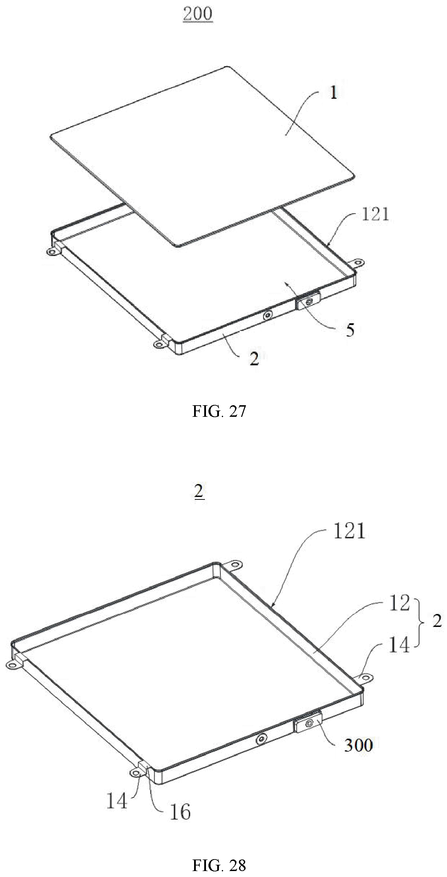

Please continue to refer to FIG. 27 and FIG. 28, FIG. 27 is an exploded schematic diagram of a battery housing 200 according to an embodiment of the present disclosure, and FIG. 28 is a schematic diagram of a three-dimensional structure of the cell housing 2 shown in FIG. 27. The battery housing 200 includes a cell housing 2 and a top cover plate 1. The cell housing 2 includes a main body portion 12 and a connection portion 14. The main body portion 12 and the connection portion 14 are of an integrally formed structure. The main body portion 12 is provided with an accommodation cavity 5 for accommodating the cell core 100, and the connection portion 14 is configured to fix the battery housing 200 at a preset position. The top cover plate 1 is connected to the main body portion 12 and seals the accommodation cavity 5.

The main body portion 12 of the battery housing 200 is provided with the accommodation cavity 5 configured to accommodate and protect the cell core 100. The connection portion 14 is connected to the main body portion 12, and the connection portion 14 is configured to fix the battery housing 200 to other electronic products. In this way, when a battery of an electronic product needs to be replaced after use, the connection between the connection portion 14 and a main body of the electronic product can be conveniently released, thereby realizing the detachable of the battery cell 00. In this embodiment, by configuring the main body portion 12 and the connection portion 14 to be an integrally formed structure, the battery housing 200 comes with a fastener fixing structure, and therefore, a screw fixing structure does not need to be added by welding or another manner after the production of the battery cell 00, thereby simplifying a production process of the battery housing 200, and reducing a production cost of the battery cell 00.

Please continue to refer to FIG. 25 to FIG. 29, FIG. 29 is an exploded schematic diagram of the cell housing 2 shown in FIG. 28. The main body portion 12 is provided with the opening 121 in communication with the accommodation cavity 5. The top cover plate 1 seals the opening 121.

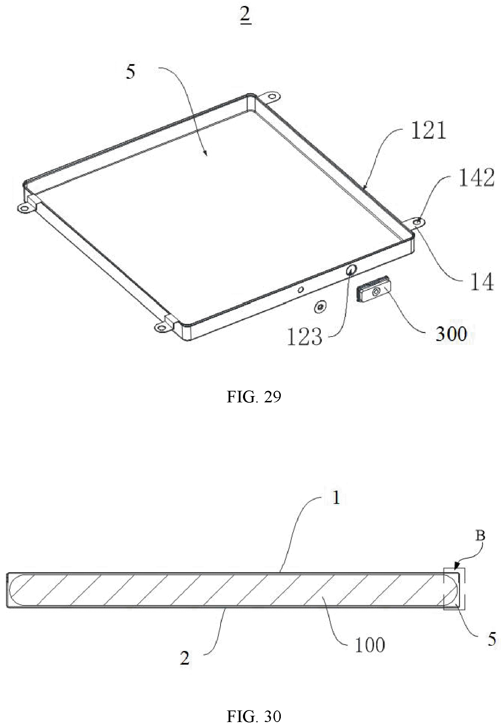

As shown in FIG. 29, the opening 121 of the main body portion 12 is communicated with the accommodation cavity 5, so that the cell core 100 can be placed into the accommodation cavity 5 through the opening 121. The top cover plate 1 is connected to the cell housing 2 so as to seal the opening 121 of the accommodation cavity 5, thereby preventing leakage of electrolyte contained in the accommodation cavity 5.

Currently, in an assembly process of the battery cell 00, the pole 300 is first assembled on the top cover plate 1, then the cell core 100 is welded with the pole 300, and finally the top cover plate 1 assembled with the pole 300 and the cell core 100 is covered on the opening 121 of the cell housing 2 and is welded to the cell housing 2. In this case, the cell core 100 is accommodated in the accommodation cavity 5. Due to the small thickness of the top cover plate 1 and the heavy weight of the assembled cell core 100, the top cover plate 1 is easy to deform after assembling the cell core 100, which is not only unfavorable for welding of the top cover plate 1 and the cell housing 2, but also inconvenient for storage of the top cover plate 1 assembled with the pole 300 and the cell core 100.

In this embodiment, as shown in FIG. 28 and FIG. 29, the main body portion 12 is provided with a terminal hole 123, which is configured to assemble the pole 300. The opening 121 and the terminal hole 123 are separately provided at adjacent sides of the main body portion 12. The pole 300 is inserted into the terminal hole 123, a portion of the pole 300 located inside the accommodation cavity 5 is connected to the cell core 100, and a portion of the pole 300 located outside the accommodation cavity 5 is configured to be connected to electric components of an electronic device, that is, the pole 300 is configured to electrically connect the cell core 100 to the electric components. Since the opening 121 and the terminal hole 123 are respectively provided at two adjacent sides of the main body portion 12, so that the pole 300 and the top cover plate 1 can be respectively installed at two adjacent sides of the main body portion 12. When assembling the battery cell 00, the pole 300 is first assembled to the terminal hole 123 of the cell housing 2, then the cell core 100 is placed into the accommodation cavity 5, and the cell core 100 is welded to the pole 300, and finally the top cover plate 1 is covered on the opening 121 of the cell housing 2 and welded to the cell housing 2. In this way, assembly difficulty of the battery cell 00 can be simplified. Furthermore, since there are no heavy objects attached to the top cover plate 1, it can make storage and transportation of the top cover plate 1 more convenient, and can avoid affecting the welding connection between the top side cover plate 1 and the cell housing 2 due to deformation of the top cover plate 1.

As shown in FIG. 29, the connection portion 14 is connected to an edge of the opening 121 of the main body portion 12, and extends in a direction away from the opening 121.

The connection portion 14 has two opposite side edges, one of which is connected to the edge of the opening 121 of the main body portion 12, and the other side edge extends in a direction away from the opening 121 for easy connection and fixation with fasteners. By designing to connect the connection portion 14 to the edge of the opening 121 of the main body portion 12, it can facilitate the integrated stamping and forming of the main body portion 12 and the connection portion 14.

The connection portion 14 may be a sheet-like structure, and one side edge of the connection portion 14 may be directly connected to the main body portion 12, which is specifically shown by the structure of the connection portion 14 on the right side of FIG. 28, so as to simplify the processing technology of the connection portion 14. Alternatively, one side edge of the connection portion 14 may be indirectly connected to the main body portion 12 through a bending portion 16, specifically as shown by the structure of the connection portion 14 on the left side of FIG. 28. In this way, the plane where the connection portion 14 is located may be spaced apart from the plane where the opening 121 is located at a certain distance, so as to facilitate matching different fastener structures.

In the embodiment shown in FIG. 28, there are two types of structures for the connection portion 14. In one embodiment, some of the connection portions 14 are directly connected to the main body portion 12, while the other of the connection portions 14 are indirectly connected to the main body portion 12. In other embodiments, all the connection portions 14 may be directly connected to the main body portion 12, or all the connection portions 14 may be indirectly connected to the main body portion 12, depending on the connection manners between the fasteners and the main body of the electronic product, which is not specifically limited herein.

In this embodiment, the main body portion 12 and the connection portion 14 are an integrally stamped structure, and a wall thickness of the main body portion 12 is equal to that of the connection portion 14. By stamping to form an integrated structure of the cell housing 2, the processing technology of the cell housing 2 can be simplified, the processing efficiency can be improved, thereby saving production time and reducing processing costs.

Alternatively, the main body portion 12 and the connection portion 14 may also be formed by injection molding or sheet metal bending.

In one embodiment, the number of the connection portions 14 is multiple, and multiple connection portions 14 are distributed on one side, two opposite sides, three adjacent sides, or four adjacent sides of the main body portion 12.

As shown in FIG. 29, the main body portion 12 is of a rectangular structure, and has four sides arranged opposite to each other. In this embodiment, the number of the connection portions 14 is four, and the four connection portions 14 are arranged on two opposite sides of the main body portion 12 at intervals, so that the two opposite ends of the main body portion 12 are subjected to a uniform force.

As shown in FIG. 24, the connection portion 14 is provided with a through hole 142, which is designed for a fastener to pass through. Specifically, the fastener may be a screw or the like, and the screw passes through the through hole 142 and is in a threaded connection with the main body of the electronic product, so as to assemble the battery cell 00 onto the main body of the electronic product. By providing the through hole 142 on the connection portion 14, it is convenient to connect the battery cell 00 to the main body of the electronic product.

The through hole 142 may be a closed structure or a notch-shaped structure. The closed structure may be circular, elliptical, waist shaped, or polygonal in shape. The notch-shaped structure may be C-shaped or U-shaped. As shown in FIG. 24, the through holes 142 are all closed circular structures, so as to make the assembly of the fastener more stable.

In some embodiments, shapes of the through holes 142 on the multiple connection portions 14 connected to the main body section 12 may be the same or may be different. For example, some of the through holes 142 may be set to be circular through holes, while the others may be set to be waist-shaped through holes, so as to reduce machining accuracy of the connection portions 14, and may be set to match main bodies of different electronic product bodies.

In this embodiment, each connection portion 14 is provided with one through hole 142. Or, in another large-sized battery cell 00, each connection portion 14 may be provided with two, three, or more through holes 142, so as to increase connection strength between the connection portion 14 and the main body of the electronic product, thereby making the connection between the battery cell 00 and the main body of the electronic product more stable.

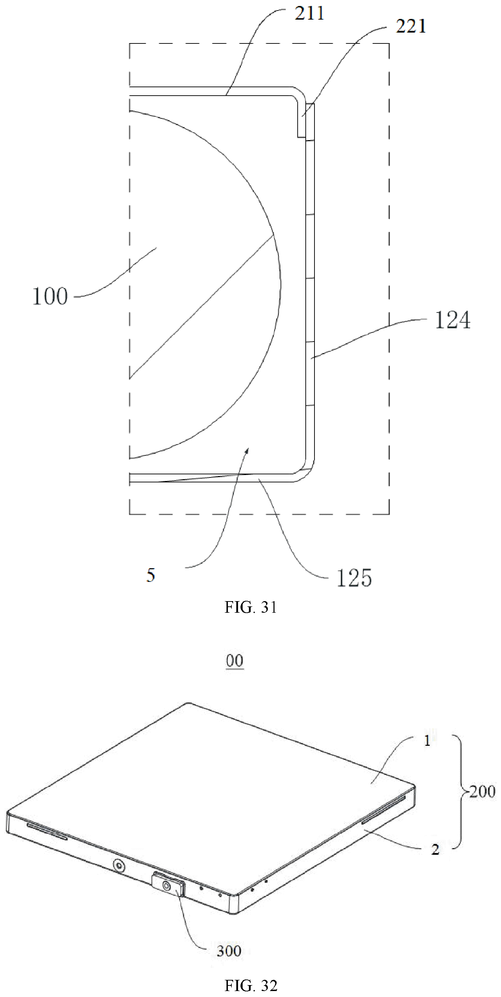

Please continue to refer to FIG. 30 and FIG. 31, FIG. 30 is a cross-sectional schematic diagram of the battery cell shown in FIG. 25, and FIG. 31 is an enlarged schematic diagram of a structure at a region B in FIG. 30. In this embodiment, the main body portion 12 includes a main bottom wall 125 and multiple main sidewalls 124. The multiple main sidewalls 124 and the main bottom wall 125 are connected together to form the accommodation cavity 5. The multiple main sidewalls 124 enclose to form the opening 121. The terminal hole 123 is provided on the main sidewall 124. The connection portion 14 is connected to a side of the main sidewall 124 away from the main bottom wall 125. The top cover plate 1 includes the cover top wall 211 and the cover sidewall 221. The cover sidewall 221 is connected to the edge of the cover top wall 211, and the cover sidewall 221 abuts against the main sidewall 124.

In this embodiment, the main bottom wall 125 is in a rectangular shape, and the number of the main sidewalls 124 is four. The four main sidewalls 124 are respectively arranged on four sides of the main bottom wall 125. The cover top wall 211 is in a rectangular shape, and the number of the cover sidewalls 221 is four. The four cover sidewalls 221 are respectively arranged on four sides of the cover top wall 211 and are connected to the cover top wall 211. When the top cover plate 1 covers the main body portion 12, the cover sidewalls 221 are located inside the accommodation cavity 5, and two opposite outer side surfaces of the cover sidewalls 221 abut against two inner side surfaces of the main sidewalls 124.

In this embodiment, by configuring the main body portion 12 and the connection portion 14 to be an integrally formed structure, the battery housing 200 comes with a fastener fixing structure, and therefore, a screw fixing structure does not need to be added by welding or another manner after the production of the battery cell 00, thereby simplifying a production process of the battery housing 200, and reducing a production cost of the battery cell 00.

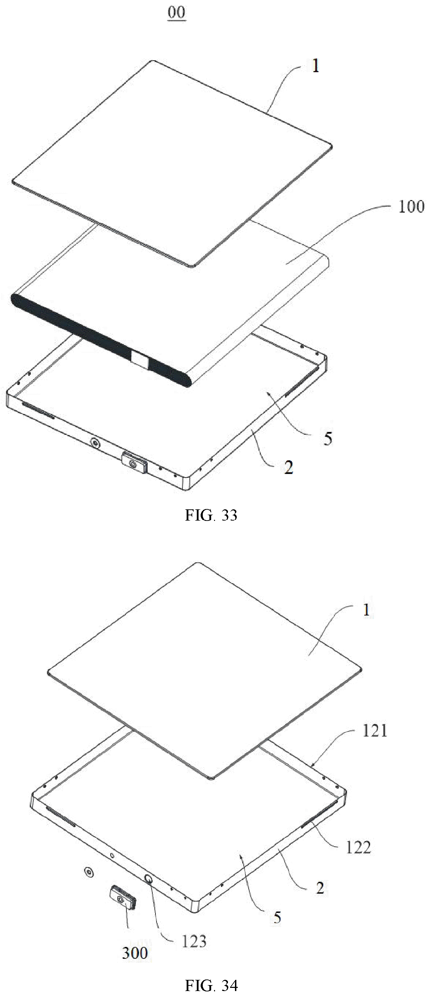

Please refer to FIG. 32 and FIG. 33, FIG. 27 is a schematic diagram of a three-dimensional structure of a battery cell 00 according to another embodiment of the present disclosure, and FIG. 33 is an exploded schematic diagram of the battery cell 00 shown in FIG. 32. The present embodiment provides the battery cell 00, which includes a cell core 100 and a battery housing 200. The cell core 100 is assembled in an accommodation cavity 5 of the battery housing 200.

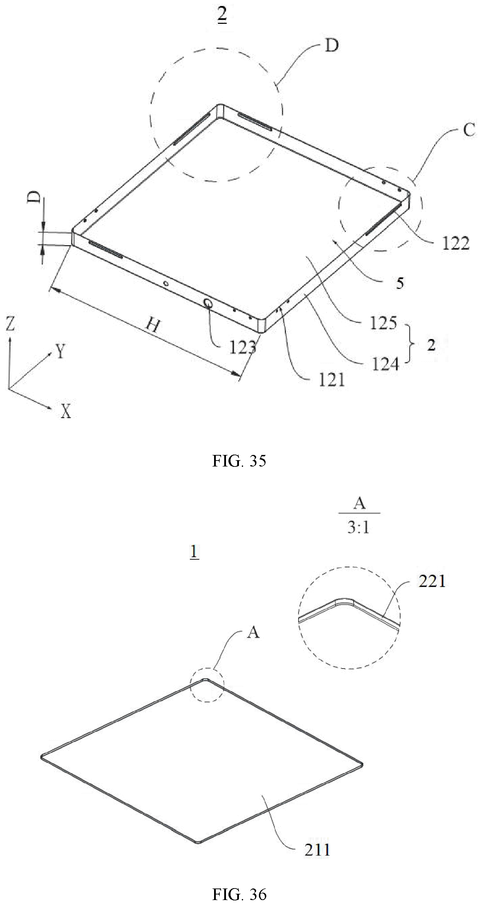

Please continue to refer to FIG. 34 and FIG. 35, FIG. 34 is an exploded schematic diagram of the battery housing 200 according to this embodiment, and FIG. 35 is a schematic diagram of a three-dimensional structure of the cell housing 2 shown in FIG. 34. The battery housing 200 includes a cell housing 2 and a top cover plate 1. The cell housing 2 is provided with an accommodation cavity 5 for accommodating the cell core 100 and an opening 121 in communication with the accommodation cavity 5. The sidewalls of the cell housing 2 are provided with protrusions 122 extending towards the accommodation cavity 5. The top cover plate 1 is welded to the cell housing 2 and seals the opening 121 of the accommodation cavity 5. The top cover plate 1 is inserted into the accommodation cavity 5 along the opening 121 and at least partially abuts against the protrusions 122, so as to position the cell housing 2 and the top cover plate 1. In this embodiment, by providing the protrusion 122 on the cell housing 2, and limiting the position by the protrusion 122 abutting against the top cover plate 1, it can facilitate welding connection between the cell housing 2 and the top cover plate 1. Furthermore, since the cell housing 2 and the top cover plate 1 do not have flange edges, the length and width dimensions of the cell housing 2 and the top cover plate 1 are reduced, and the energy density of the battery cell 00 is improved.

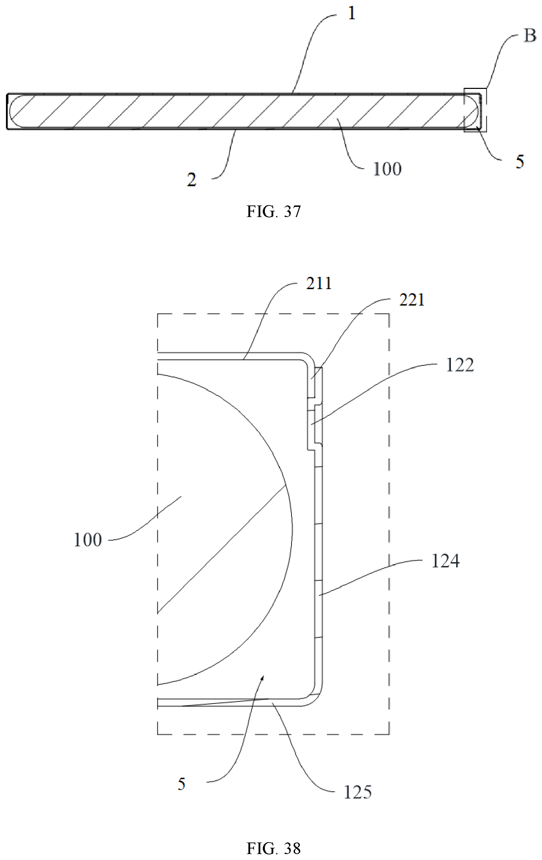

As shown in FIG. 35 to FIG. 38, FIG. 36 is a schematic diagram of a three-dimensional structure of the top cover plate 1 shown in FIG. 35 and an enlarged schematic diagram of a partial structure of the top cover plate 1 at a region A. FIG. 37 is a cross-sectional schematic diagram of the battery cell 00 shown in FIG. 32. FIG. 38 is an enlarged schematic diagram of a partial structure at a region B of FIG. 37. The cell housing 2 includes a main bottom wall 125 and multiple main sidewalls 124. The multiple main sidewalls 124 and the main bottom wall 125 are connected together to form the accommodation cavity 5. The multiple main sidewalls 124 enclose to form the opening 121, and the protrusion 122 is arranged on the multiple main sidewalls 124. The top cover plate 1 includes a cover top wall 211 and multiple cover sidewalls 221. The multiple cover sidewalls 221 are connected to edges of the cover top wall 211. The protrusion 122 abuts one side of the cover sidewall 221 away from the cover top wall 211.

In this embodiment, the main bottom wall 125 is in a rectangular shape, and the number of the main sidewalls 124 is four. The four main sidewalls 124 are respectively arranged on four sides of the main bottom wall 125, and the protrusions 122 are arranged on the multiple main sidewalls 124. The cover top wall 211 is in a rectangular shape, and the number of the cover sidewalls 221 is four. The four cover sidewalls 221 are respectively arranged on four sides of the cover top wall 211 and are connected to the cover top wall 211. When the top cover plate 1 covers the cell housing 2, the end portion of the cover sidewall 221 facing away from the cover top wall 211 abuts against the protrusion 122 on the main sidewall 124. By arranging the protrusions 122 on the main sidewall 124, it is easy to arrange the cover sidewall 221 with a short length, thereby facilitating the processing and molding of the top cover plate 1.

As shown in FIG. 37 and FIG. 38, in this embodiment, the cover sidewall 221 is located in the accommodation cavity 5, and the outer side surface of the cover sidewall 221 abut against the inner side surface of the main sidewall 124, so as to reduce the gap between the top cover plate 1 and the cell housing 2. The protrusion 122 is provided on the inner side surface of the main sidewall 124 to abut against the bottom of the cover sidewall 221.

In some embodiments, a plurality of protrusions 122 may be provided. The plurality of protrusions 122 are spaced apart from each other on the main sidewall 124, and the plurality of protrusions 122 have the same height from the main bottom wall 125.

In this embodiment, the height direction of the main sidewall 124 is provided with the plurality of spaced protrusions 122, and the distances between the plurality of protrusions 122 and the main bottom wall 125 are equal. That is, the plurality of protrusions 122 are located in a horizontal plane parallel to the main bottom wall 125. In this way, the height of the multiple cover sidewalls 221 of the top cover 1 can be set to be the same, which not only facilitates the processing and production of the top cover plate 1, but also eliminates the need for special alignment operations during the assembly of the top side cover plate 1. As a result, when the top cover plate 1 is placed on the opening 121 of the cell housing 2, the plurality of protrusions 122 may simultaneously abut against the top cover plate 1, thereby positioning and limiting the top cover plate 1 along the height direction. By arranging the plurality of spaced protrusions 122, the limiting effect of the protrusions 122 on the top cover plate 1 can be enhanced, thereby improving the positioning effect of the top cover plate 1.

In some embodiments, the protrusions 122 may be provided with a cross-section that is in at least one of a long strip shape and a circular shape.

The cross-section of the protrusion 122 refers to a cross-section of the protrusion 122 on a surface parallel to a plane where the main sidewall 124 is located. In some embodiments, the cross-sections of all the protrusions 122 may be set to be in a long strip shape, and the length direction of the elongated protrusions 122 is parallel to the plane direction of the main bottom wall 125. By providing the strip-shaped protrusion 122, the contact force of the protrusion 122 against the top cover plate 1 can be increased.

Alternatively, in other embodiments, all the cross-sections of the protrusion 122 may be set to be in a circular shape. By providing the circular-shaped protrusion 122, excessive interference of the protrusion 122 on the top cover plate 1 may be avoided, thereby reducing the machining accuracy of the top cover plate 1 and the protrusion 122.

In this embodiment, the cross-sections of the plurality of protrusions 122 may be both in a long strip shape and a circular shape, that is, the cross-sections of some of the protrusions 122 may be set to be in a circular shape, the cross-sections of some of the protrusion 122 may be set to be in a long strip shape, so that not only ensures an abutting force of protrusions 122 on the top cover plate 1, but also avoids excessive interference between protrusions 122 and the top side cover plate 1, thereby reducing the machining accuracy of the top cover plate 1 and the protrusion 122.

In one embodiment, when the main bottom wall 125 is arranged in a polygonal shape, the plurality of protrusions 122 may be arranged near corner positions of the cell housing 2. The corner position of the cell housing 2 specifically refers to a position other than the central axis position in the length direction of the main sidewall 124.

As shown in FIG. 35, FIG. 39 and FIG. 40, in the present embodiment, the main bottom wall 125 is arranged in a rectangular shape, the cell housing 2 has four corners, and the protrusions 122 are located at positions adjacent to the corners, that is, at two opposite ends in the length direction of each main sidewall 124, so as to facilitate positioning of the corner position of the top cover plate 1, thereby improving the stability of the top cover plate 1 and preventing the corner of the top cover 1 from curling up.

In other embodiments, when the main bottom wall 125 is provided in other polygonal shapes as needed, the plurality of protrusions 122 may also be provided at positions adjacent to the corners.

In an embodiment, when the protrusions 122 include at least two types of protrusions 122 having different cross-sectional shapes, the protrusions 122 adjacent to the same corner have a same cross-sectional shape, so that two adjacent cover sidewalls 221 of the top cover 1 are subjected to uniform force.

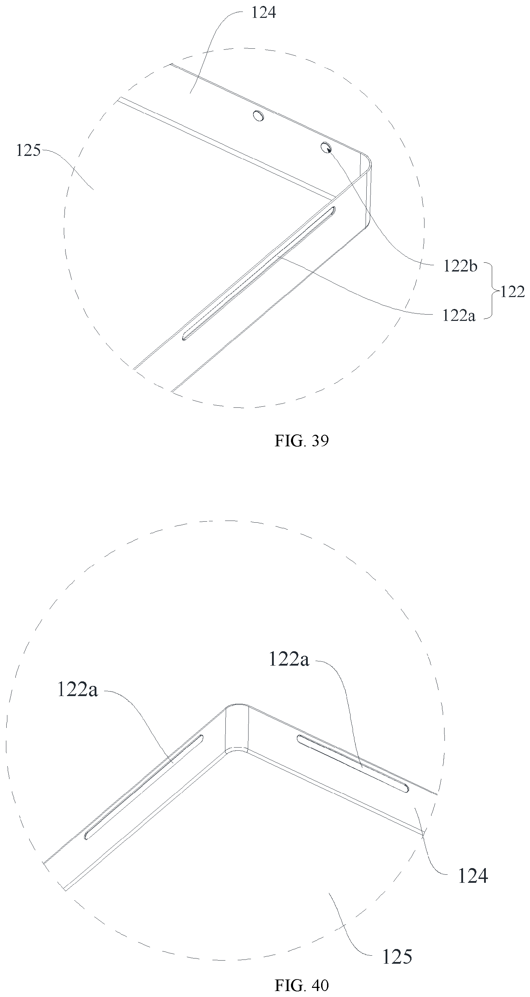

As shown in FIG. 35, FIG. 39 and FIG. 40, FIG. 39 is an enlarged schematic diagram of a partial structure at a region C in FIG. 35, and FIG. 40 is an enlarged schematic diagram of a partial structure at a region D in FIG. 35. The plurality of protrusions 122 may include first protrusions 122a and second protrusions 122b having different cross-sectional shapes. Each main sidewall 124 is provided with the first protrusion 122a and the second protrusion 122b.

In this embodiment, the cross-sectional shape of the first protrusion 122a is an elongated strip, a length direction of the first protrusion 122a is parallel to a plane direction in which the main bottom wall 125 is located. The cross-sectional shape of the second protrusion 122b is a circle, that is, the first protrusion 122a is a strip-shaped rib, and the second protrusion 122b is a circular bump. The number of the protrusions 122 provided on each main sidewall 124 is three, and specifically, two spaced second protrusions 122b and one strip-shaped first protrusion 122a may be included. The two second protrusions 122b are arranged at intervals along the length direction of the first protrusion 122a, that is, the two second protrusions 122b and the first protrusion 122a are equidistant from the main bottom wall 125, so as to define a horizontal plane together.

In some other embodiments, the cross-section of the protrusion 122 may also be set to be in a shape such as a square, a triangle, or a trapezoid, which is not specifically limited herein, and may be flexibly selected according to a processing needs.

In one embodiment, the cell housing 2 may be designed as an integrally stamped structure, and the top cover plate 1 may be designed as an integrally stamped structure. The integrated structure of the cell housing 2 and the top cover plate 1 formed by stamping can simplify the processing technology of the cell housing 2 and the top cover plate 1, improve the machining efficiency, save production time, and reduce the machining costs.

In an embodiment, the protrusions 122 may be integrally formed with the cell housing 2, that is, the plurality of protrusions 122 may be formed by stamping the main sidewall 124 of the cell housing 2, so as to form an inseparable integrated structure, thereby simplifying the processing technology of the protrusion 122 and improving the processing efficiency. Alternatively, the plurality of protrusions 122 may also be connected to the cell housing 2 by bonding or welding, which is not specifically limited herein.

In an embodiment, as shown in FIG. 35, one terminal hole 123 is provided on the main sidewall 124 of the cell housing 2. The terminal hole 123 is configured to assemble the pole 300, and the opening 121 and the terminal hole 123 are respectively located at two adjacent sides of the cell housing 2. The pole 300 is inserted into the terminal hole 123, a portion of the pole 300 located inside the accommodation cavity 5 is connected to the cell core 100, and a portion of the pole 300 located outside the accommodation cavity 5 is configured to be connected to electrical components of an electronic device, that is, the pole 300 is configured to electrically connect the cell core 100 to the electric device.

Currently, in an assembly process of a battery cell, the pole 300 is first assembled on the top cover plate, then the cell core is welded with the pole 300, and finally the top cover plate assembled with the pole 300 and the cell core is covered on the opening of the cell housing and is welded to the cell housing. In this case, the cell core is accommodated in the accommodation cavity. Due to the small thickness of the top cover plate and the heavy weight of the assembled cell core, the top cover plate is easy to deform after assembling the cell core, which is not only unfavorable for welding of the top cover plate and the cell housing, but also inconvenient for storage of the top cover plate assembled with the pole 300 and the cell core.

In this embodiment, the opening 121 and the terminal holes 123 are respectively provided at two adjacent sides of the cell housing 2. When assembling the battery cell 00, the pole 300 is first assembled to the terminal hole 123 of the cell housing 2, then the cell core 100 is placed into the accommodation cavity 5, and the cell core 100 is welded to the pole 300, and finally the top cover plate 1 is covered on the opening 121 of the cell housing 2 and welded to the cell housing 2. In this way, assembly difficulty of the battery cell 00 can be simplified. Furthermore, since there are no heavy objects attached to the top cover plate 1, it can make storage and transportation of the top cover plate 1 more convenient, and can avoid affecting the welding connection between the top side cover plate 1 and the cell housing 2 due to deformation of the top cover plate 1.

In this embodiment, the cell housing 2 has a horizontal direction and a height direction that are perpendicular to each other. The cell housing 2 is provided with the opening 121 in the height direction that communicates with the accommodation cavity 5, and the cell housing 2 is provided with the terminal hole 123 in the horizontal direction.

As shown in FIG. 35, the horizontal direction of the cell housing 2 is a horizontal plane direction formed by the X-axis and the Y-axis, and the height direction of the cell housing 2 is a Z-axis direction perpendicular to the horizontal plane direction formed by the X-axis and the Y-axis. The height of the cell housing 2 in the height direction is D, the length of the cell housing 2 in the horizontal direction is H, and D<H may be set.

The horizontal length H of the cell housing 2 refers to the smaller of the length of the cell housing 2 along the X-axis and the length of the cell housing 2 along the Y-axis. By setting the dimension of the cell housing 2 in the height direction to be smaller than the dimension in the horizontal direction, it can facilitate the placement of the cell core 100 into the accommodation cavity 5 through the opening 121 and facilitatethe molding of the cell housing 2.

In some embodiments, 5 ≤ H/D ≤ 10 can be set. By setting a ratio of the length of the cell housing 2 in the horizontal direction to the height of the cell housing 2 in the Z-axis direction to be greater than or equal to 5 and less than or equal to 10, the cell housing 2 can have a suitable height and length, which facilitates the integrated processing and molding of the cell housing 2 by stamping, and can facilitate the assembly of the top cover plate 1.

The ratio of the length of the cell housing 2 along the X-axis direction or the length of the cell housing 2 along the Y-axis direction to the height of the cell housing 2 along the Z-axis direction can be set to, for example, 5, 5.5, 6, 6.5, 7, 7.5, 8, 8.5, 9, 9.5, 10, etc., and the specific ratio can be selected according to the specification of the battery cell.

In this embodiment, by providing the protrusion 122 on the cell housing 2, and limiting the position by the protrusion 122 abutting against the top cover plate 1, it can facilitate welding connection between the cell housing 2 and the top cover plate 1. Furthermore, since the cell housing 2 and the top cover plate 1 do not have flange edges, the length and width dimensions of the battery housing 200 is reduced, and the energy density of the battery cell 00 is improved. Furthermore, this make it more convenient for the molding of the cell housing 2 and the top cover plate 1, and the operational stability of the battery cell 00 can be improved.

The present disclosure further provides a battery cell, which includes a battery housing provided in the embodiments of the present disclosure.

In a specific embodiment, the battery cell further includes a positive terminal 3. The positive terminal 3 is arranged on the battery housing, and the battery housing serves as a negative electrode. By using the battery housing as a negative electrode, the need for an additional independent negative electrode component is reduced, so that the overall structure of the battery is more simple, which helps to reduce the manufacturing costs and the assembly complexity of the battery. Furthermore, since there is mo need for an independent negative electrode structure, there can be more space inside the battery for accommodating electrode materials and electrolytes, thereby increasing the energy density of the battery.

In a specific embodiment, the battery cell further includes the cell core 100, and the accommodation cavity 5 for assembling the cell core 100 is formed between the top cover plate 1 and the cell housing 2. The accommodation cavity 5 provides a specific mounting position for the cell core 100, enabling it to be placed stably inside the battery. This helps to prevent the cells from moving or shaking during the use of the battery, reducing the risk of loose or damage to the internal connection caused by the displacement of the cells. Furthermore, the accommodation cavity 5 formed by the top cover plate 1 and the cell housing 2 can provide certain physical protection for the cell core 100, and can prevent direct impact, compression or scratching of the cell by external objects, thereby reducing the possibility of damage to the cell.

The present disclosure further provides a battery pack, which includes the battery cell provided in the embodiments of the present disclosure. In the battery pack, the top cover welding section 11 which is bent inwards is formed on the top cover plate 1, and the first step section 21 which is bent outwards is formed at the opening of the cell housing 2. Furthermore, positioning and assembly are performed by using the top cover welding section 11 and the first step section 21. Specifically, positioning and assembly are performed by using facing surfaces of the top cover welding section 11 and the first step section 21. Since the facing surfaces of the top cover welding section 11 and the first step section 21 are large in area, the area used for positioning and assembly is correspondingly large, which effectively increases the area between the cell housing 2 and the top cover plate 1 used for positioning and assembly, so as to prevent inclination or shaking between the cell housing 2 and the top cover plate 1, thereby preventing poor welding defects.

## Claims

1. A battery housing, comprising a top cover plate and a cell housing for assembling a positive terminal, wherein the top cover plate is welded at a top opening provided at a top of the cell housing;
wherein the top cover plate is in a shape of a flat plate; the cell housing is outwardly expanded at the top opening along a circumferential direction of the top opening and then bent to form a first step section; wherein the top cover plate abuts against and is welded to the first step section.

2. The battery housing according to claim 1, wherein the first step section is vertically arranged.

3. The battery housing according to claim 1 or 2, further comprising a bottom cover plate welded at a bottom opening provided at a bottom of the cell housing;
wherein the bottom cover plate is in a shape of a flat plate; the cell housing is outwardly expanded at the bottom opening along a circumferential direction of the bottom opening and then bent to form a second step section; wherein the bottom cover plate abuts against and is welded to the second step section of the cell housing.

4. The battery housing according to claim 3, wherein the second step section extends in a vertical direction.

5. The battery housing according to claim 1, wherein the first step section is provided to be inclined outwards.

6. The battery housing according to claim 5, wherein a bending angle of the first step section is set to α, and the bending angle α is an angle between an inclined extension direction of the first step section and a vertical direction, and 0<α<90°.

7. The battery housing according to claim 1, wherein a circumferential side edge of the top cover plate is bent inward to form a top cover welding section arranged obliquely; the first step section is provided to be inclined outwards; and an outer side surface of the top cover welding section abuts against and welded to an inner side surface of the first step section.

8. The battery housing according to claim 7, wherein a bending angle of the first step section is set to α, and the bending angle α is an angle between an inclined extension direction of the first step section and a vertical direction, and 0<α<90°;
a bending angle of the top cover welding section is set to β, and the bending angle β is an angle between an extension direction of the top cover welding section and the vertical direction, and β=α.

9. The battery housing according to any one of claims 1, 2 and 4 to 8, wherein an outer expansion section is provided between the first step section and the cell housing, which is provided to be inclined outward.

10. The battery housing according to claim 1, wherein the cell housing is provided with an accommodation cavity for accommodating a cell core and an opening in communication with the accommodation cavity; the top cover plate is inserted into the accommodation cavity through the opening and abuts against a bottom of the accommodation cavity so as to close the opening; the cell housing and the top cover plate are welded together at the opening.

11. The battery housing according to claim 10, wherein the cell housing comprises a main bottom wall and multiple main sidewalls; wherein the multiple main sidewalls and the main bottom wall are connected together to form the accommodation cavity; the multiple main sidewalls enclose to form the opening;
the top cover plate comprises a cover top wall and multiple cover sidewalls, wherein the multiple cover sidewalls are connected to edges of the cover top wall; the cover top wall covers the opening; a side surface of the cover sidewall is attached to the main sidewall; a bottom of at least one of the multiple cover sidewalls abuts against the main bottom wall.

12. The battery housing according to claim 11, wherein the number of the cover sidewalls is two, wherein the two cover sidewalls are arranged on two opposite edges of the cover top wall; or the number of the cover sidewalls is three, wherein the three cover sidewalls are arranged on adjacent edges of the cover top wall; or, the number of the cover sidewalls is four, wherein the four cover sidewalls are arranged on adjacent edges of the cover top wall.

13. The battery housing according to claim 11, wherein the cell housing is provided with a terminal hole, which is configured to be assembled with a pole; wherein the opening and the terminal hole are respectively provided at two adjacent sides of the cell housing.

14. The battery housing according to claim 13, wherein the cell housing has a horizontal direction and a height direction perpendicular to each other; the cell housing is provided with the opening in the height direction, and the cell housing is provided with the terminal hole in the horizontal direction; wherein the height of the cell housing in the height direction is D, and the length of the cell housing in the horizontal direction is H, wherein D<H.

15. The battery housing according to claim 13, wherein the multiple cover sidewalls comprise a first cover sidewall and a second cover sidewall, wherein the first cover sidewall and the second cover sidewall are arranged on two opposite sides of the cover top wall; and side surfaces of the first cover sidewall and the second cover sidewall which are away from each other are respectively attached to corresponding main sidewalls; bottoms of the first cover sidewall and the second cover sidewall abut against the main bottom wall; and the terminal hole is provided on the main sidewall of the main sidewall that is not attached to the first cover sidewall and the second cover sidewall.

16. The battery housing according to claim 13, wherein the multiple cover sidewalls comprise a first cover sidewall and a second cover sidewall, wherein the first cover sidewall and the second cover sidewall are arranged on two opposite sides of the cover top wall; and side faces of the first cover sidewall and the second cover sidewall which are away form each other are respectively attached to corresponding main sidewalls; a bottom of the first cover sidewall abuts against the main bottom wall, and a bottom of the second cover sidewall is spaced apart from the main bottom wall to form a clearance space between them, and the terminal hole is arranged in the clearance space.

17. The battery housing according to claim 11, wherein the top cover plate further comprises an extension section, wherein the extension section is connected to an edge of the cover sidewall away from the cover top wall; the extension section and the cover top wall extend at the same side of the cover sidewall; and the cover sidewall abuts against the main bottom wall through the extension section.

18. The battery housing according to any one of claims 10 to 17, wherein the cell housing is an integrally stamped structure, and the top cover plate is an integrally stamped structure.

19. The battery housing according to claim 1, wherein the cell housing comprises a main body portion and a connection portion, wherein the main body portion and the connection portion are of an integrally formed structure; the main body portion is provided with an accommodation cavity, and the connection portion is configured to fix the battery housing at a preset position;
the top cover plate is connected to the main body and seals the accommodation cavity.

20. The battery housing according to claim 19, wherein the main body portion is further provided with the opening; the top cover plate seals the opening; the main body portion is provided with a terminal hole, wherein the terminal hole is configured to assemble a pole; wherein the opening and the terminal hole are respectively provided at adjacent sides of the main body portion.

21. The battery housing according to claim 19, wherein the connection portion is connected to an edge of the opening of the main body portion, and extends in a direction away from the opening.

22. The battery housing according to claim 19, wherein the main body and the connection portion are an integrally stamped structure, and a wall thickness of the main body portion is equal to that of the connection portion.

23. The battery housing according to any one of claims 19 to 22, wherein the number of the connection portions is multiple, wherein multiple connection portions are distributed on one side, two opposite sides, three adjacent sides or four adjacent sides of the main body portion.

24. The battery housing according to any one of claims 19 to 22, wherein the connection portion is provided with a through hole, which is configured for a fastener to pass through.

25. The battery housing according to claim 24, wherein the through hole is a closed structure or a notch-shaped structure.

26. The battery housing according to any one of claims 19 to 22, wherein the connection portion is directly connected to the main body portion, or the connection portion is indirectly connected to the main body portion through a bending portion; or, some of the connection portion are directly connected to the main portion, and the other of the connection portions are indirectly connected to the main portion through the bending portion.

27. The battery housing according to claim 20, wherein the main body comprises a main bottom wall and multiple main sidewalls, wherein the multiple main sidewalls and the main bottom wall are connected together to form the accommodation cavity; the multiple main sidewalls enclose to form the opening; the terminal hole is provided on the main sidewall, and the connection portion is connected to a side of the main sidewall away from the main bottom wall;
the top cover plate comprises a cover top wall and multiple cover sidewalls, wherein the multiple cover sidewalls are connected to edges of the cover top wall, and the cover sidewalls abut against the main sidewall.

28. The battery housing according to claim 1, wherein the cell housing is provided with an accommodation cavity for accommodating a cell core and an opening in communication with the accommodation cavity; sidewalls of the cell housing are provided with protrusions extending towards the accommodation cavity;
the top cover plate is connected to the cell housing and seals an opening of the accommodation cavity; the top cover plate is inserted into the accommodation cavity along the opening and at least partially abuts against the protrusions, so as to position the cell housing and the top cover plate.

29. The battery housing according to claim 28, wherein the cell housing comprises a main bottom wall and multiple main sidewalls; wherein the multiple main sidewalls and the main bottom wall are connected together to form the accommodation cavity; the multiple main sidewalls enclose to form the opening, and the protrusions are provided on the multiple main sidewalls;
the top cover plate comprises a cover top wall and multiple cover sidewalls, wherein the multiple cover sidewalls are connected to edges of the cover top wall; the protrusions abuts one side of the cover sidewall away from the cover top wall.

30. The battery housing according to claim 29, wherein the number of the protrusions is multiple, the multiple protrusions are are spaced apart from each other on the main sidewall, and the multiple protrusions have the same height from the main bottom wall.

31. The battery housing according to claim 29, wherein the main bottom wall is arranged in a polygonal shape; the number of the protrusions is multiple, and the multiple protrusions are arranged near corner positions of the cell housing.

32. The battery housing according to claim 31, wherein the protrusions comprises at least two types of protrusions having different cross-sectional shapes; wherein the protrusions adjacent to the same corner have a same cross-sectional shape.

33. The battery housing according to any one of claims 28 to 31, wherein the protrusions comprise first protrusions and second protrusions having different cross-sectional shapes; and each of the main sidewalls is provided with the first protrusion and the second protrusion.

34. The battery housing according to claim 33, wherein the cross-section of the first protrusion is in an elongated strip shape, wherein a length direction of the first protrusion is parallel to a plane direction in which the main bottom wall is located; the cross-section of the second protrusion is in a circular shape; the number of the second protrusions arranged on the same main sidewall is two, wherein the two second protrusions are arranged at intervals along the length direction of the first protrusion.

35. The battery housing according to claim 28, wherein the cell housing is provided with a terminal hole, which is configured to be assembled with a pole; wherein the opening and the terminal hole are respectively provided at two adjacent sides of the cell housing.

36. The battery housing according to claim 35, wherein the cell housing has a horizontal direction and a height direction perpendicular to each other; the cell housing is provided the opening in the height direction, and the cell housing is provided with the terminal hole in the horizontal direction; wherein the height of the cell housing in the height direction is D, and the length of the cell housing in the horizontal direction is H, wherein D<H.

37. A battery cell, comprising the cell housing as claimed in any one of claims 1 to 36 and a positive terminal; wherein the positive terminal is provided on the cell housing, and the cell housing serves as a negative electrode.

38. A battery pack comprising the battery cell as claimed in claim 37.
